# EUROPEAN PATENT SPECIFICATION

(11) **EP 0 767 814 B1**
(45) Date of publication and mention of the grant of the patent: **25.08.1999**
(21) Application number: 95923682.9
(22) Date of filing: 01.06.1995
(51) Int. Cl.: C08L 53/02, C08L 23/16

(54) **THERMOELASTIC BLEND COMPOSITIONS**
THERMOPLASTISCHE ZUSAMMENSETZUNGEN
COMPOSITIONS POUR MELANGES THERMOELASTIQUES

(30) Priority: 01.06.1994 US 252489; 29.08.1994 US 298238
(43) Date of publication of application: 16.04.1997
(73) Proprietor: THE DOW CHEMICAL COMPANY, Midland, Michigan 48674 (US)
(72) Inventor: BETSO, Stephen, R., CH-8810 Horgen (CH); GUEST, Martin, J., NL-Terneuzen (NL); VAN DEN BERGHEN, Peter, F., M., NL-Graauw (NL); BATISTINI, Antonio, CH-Zurich (CH); AHMED, Wasif, K., Fresno, TX 77545 (US); HO, Thoi, H., Lake Jackson, TX 77566 (US); KNIGHT, George, W., Lake Jackson, TX 77566 (US); PARIKH, Deepak, R., Lake Jackson, TX 77566 (US); PATEL, Rajen, M., Lake Jackson, TX 77566 (US)
(74) Representative: Weiss, Wolfgang, Dipl.-Chem. Dr.
(86) International application number: PCT/US95/06903
(87) International publication number: WO 95/33006

(56) References cited:
- WO-A-93/08221
- WO-A-94/06859
- WO-A-94/18263
- WO-A-94/25515
- US-A- 5 340 840

## Description

This invention relates to thermoplastic elastomeric compositions containing substantially inert thermoelastic extenders. In particular, the invention relates to thermoplastic elastomeric compositions comprising styrene block polymers in blend combination with homogeneous ethylene interpolymers.

Styrene block copolymers are very versatile thermoplastic elastomers that are widely used in the industry, frequently for impact modification of thermoplastic resins and engineering thermoplastics or for compatibilization of different types of resins. Styrene block copolymers are recognized as strong, flexible high performance elastomers that do not require vulcanization and yet exhibit excellent elasticity over a wide range of service temperatures. Due to their unique molecular structure and versatility, styrene block copolymers are used in a wide spectrum of enduses such as moldable goods, automotive interior and exterior parts, and medical devices.

Styrene block copolymers are available with linear, diblock, triblock and radial molecular structures. Each polymer molecule consists of a styrenic block segment and a rubber monomer block segment. The rubber segment may consist of saturated or unsaturated monomer units such as ethylene/butene and ethylene/propylene, or butadiene and isoprene, respectively. Styrene block copolymers having saturated rubber monomer segments typically exhibit improved thermal, oxidative and processing stability, improved clarity or transparency, better weather resistance, and higher temperature serviceability when compared to copolymers consisting of unsaturated rubber monomer segments.

Although styrene block copolymers are very useful, they have a number of deficiencies. These materials are relatively expensive to produce and due to their fairly difficult manufacturing requirements are often in short supply. Blends of polymer components not readily miscible with these block copolymers, such as conventional polyethylenes, can exhibit inferior mechanical properties, especially failure properties and poorer ductility related properties, such as tensile elongation at rupture. Moreover, due to the inability of their particles or pellets to expediently melt and fuse together with the application of heat, styrene block copolymers with saturated rubber monomer segments are fairly difficult to formulate and process. Processing in conventional equipment such as, for example, a Banbury mixer, is typically characterized by an initial induction or delay period which adds to processing costs. As another disadvantage, this delay, which in effect constitutes an additional heat history, can contribute to the overall thermal and processing instability of the copolymer.

Because of high material costs, shortages and processing difficulties, it is desirable to provide blend components that can extend available quantities of styrene block copolymers without substantially altering the key elastic properties of the latter. It would be further desirable to provide blends of styrene block copolymers having saturated rubber block copolymers and other polymeric components which maintain or improve the performance of the block copolymer while providing transparent blends. It would also be desirable to improve the U.V. stability and abrasion resistance of styrene block copolymers having saturated rubber monomer segments as well as provide component materials that function as processing aids or fusion promoters whereby the delay times associated with thermally processing styrene block copolymers having saturated rubber monomer segments can be substantially reduced. Further, it is desirable to improve the properties of block copolymers having unsaturated rubber monomer block segments without the higher manufacturing costs typically associated with block copolymers having saturated rubber monomer segments.

There has been a long felt need to mitigate the above difficulties associated with conventional thermoplastic elastomeric materials but, unfortunately, prior art efforts to do so have not been entirely successful. Prior art proposals to facilitate the use of ordinary thermoelastic materials tend to involve curing steps or multicomponent compositions with extensive formulating requirements. For example, Shell Oil Company in its Kraton brochure indicates the Kraton materials are highly extendable presumably by specific combinations of involving fillers, resins and oils. On page 3 of the brochure, Kraton D compounds and Kraton G compounds are said to contain other suitable ingredients. Further, where other ingredients are used, including fillers and oils in combination or alone, it is expected that special handling and equipment would be required for uniform admixing with solid block copolymer resins.

Where ordinary thermoelastic materials, such as, for example, ethylene/vinyl acetate (EVA) copolymers, are used as single-component extenders for block copolymers, the elastic, rheological, stability or hardness properties of the final composition tend to vary substantially relative to neat compositions of the respective block copolymer. Still other prior art disclosures involving ethylene/α-olefin interpolymers in combination with block copolymers such as, for example, U.S. Patent 5,272,236, which discloses blends of substantially linear ethylene interpolymers and styrene butadiene copolymers, and Plastics Technology, August 1994, page 54, which mentions similar blends useful for molded goods, do not teach the specific requirements that enable the use of such materials as substantially inert extenders, nor entirely resolve the deficiencies characteristic of styrene block copolymers.

It has been discovered that the combination of at least one block copolymer and with specified amounts of at least one homogeneously branched ethylene interpolymer having a single DSC melt point yields a thermoplastic elastomeric composition having essentially the same elastic and hardness properties as the block copolymer portion of the composition. The particular effect of the homogeneously branched ethylene interpolymer can be described as a substantially inert thermoelastic extender of the styrene block copolymer.

One aspect of the present invention is a thermoplastic elastomeric blend composition comprising (a) from 50 to 99 percent by weight of the total composition of at least one styrenic block copolymer and (b) from 1 to 50 percent by weight of the total composition of at least one ethylene/α-olefin interpolymer, wherein the ethylene/α-olefin interpolymer comprises at least one C₃-C₂₀ α-olefin and is characterized as having
i. a density from 0.855 g/cc (1cc = 1 cm³) to 0.905 g/cc,
ii. a short chain branching distribution index (SCBDI) greater than 50 percent,
iii. a single melting point between -30°C and 140°C, as determined using differential scanning calorimetry (DSC).
iv. a melt flow ratio, I₁₀/I₂, ≥ 5.63,
v. a molecular weight distribution, M_{w}/Mₙ, defined by the equation: M_{w}/Mₙ ≤ (I₁₀/I₂) - 4.63, and
vi. a critical shear rate at onset of surface melt fracture at least 50 percent greater than the critical shear rate at onset of surface melt fracture of a linear ethylene/C₃-C₂₀ α-olefin interpolymer having about the same I₂ and M_{w}/Mₙ.
vii from 0.01 branches/1000 carbon atoms to 3 branches/1000 carbon atoms wherein the length of these branches is longer than the branches that result from the incorporation of the α-olefin comonomer(s) into the polymer backbone.

Another aspect of the present invention is a thermoplastic elastomeric blend composition comprising (a) from 50 to 99 percent by weight of the total composition of at least one styrenic block copolymer and (b) from 1 to 50 percent by weight of the total composition of at least one linear ethylene/α-olefin interpolymer, wherein the linear ethylene/α-olefin interpolymer comprises at least one C₃-C₂₀ α-olefin and is characterized as having
i. a density from 0.855 g/cc to 0.905 g/cc,
ii. a short chain branching distribution index (SCBDI) greater than 50 percent, and
iii. a single melting point, as determined using differential scanning calorimetry (DSC).

Another aspect of the present invention is a method of making a fabricated article in the form of a film, fiber and molding from the novel thermoplastic elastomeric composition.

In still another aspect, the present invention provides a fabricated article in the form of a film, fiber or molding made from the novel thermoplastic elastomeric composition.

In addition to utility as a substantially unaltered neat block copolymer, the novel composition also exhibits improved processability. Particular ethylene interpolymers, functioning as fusion promoters and processing aids, substantially reduce the processing delay times characteristic of styrene block copolymers having saturated rubber monomer units.

As still another benefit of the present invention, the novel composition also exhibits improved stability when exposed to stresses such as heat, shear and ultraviolet radiation relative to a comparative styrene block copolymer having unsaturated rubber monomer units.

The functioning of select ethylene interpolymers as substantially inert thermoelastic extenders is surprising since, although such thermoelastic polymers are generally elastic, their properties can differ substantially from those of block copolymers and good miscibility is achieved for the compositions even though the specific chemistries of the components are substantially different.

While the invention is not limited to any particular theory of operation, the surprising enhancements are believed to be due to the unique compatibility and miscibility obtainable with elastic, compositionally uniform ethylene interpolymers of the invention. Such utility and improvements are not obtainable with ordinary thermoelastic materials such as, for example, ethylene/vinyl acetate (EVA) copolymers even at high vinyl acetate levels, nor with ethylene interpolymers having polymer densities substantially greater than 0.905 g/cc.

Figure 1 is a plot of the dynamic storage modulus versus temperature for Inventive Examples 6 and 8 and Comparative Runs 7, 9 and 10 as determined using a Rheometrics Solid Analyzer RSA-II.

Figure 2 is a plot of the dynamic storage modulus versus temperature for Inventive Examples 6 and 8 and Comparative Runs 7, 9 and 10 as predicted based on weight average contributions of the component materials.

Figure 3 is a plot of the dynamic complex viscosity versus shear rate for Inventive Examples 6 and 8 and Comparative Runs 7, 9 and 10 as determined using a Rheometrics Rheometer RMS-800 at 190°C.

Figure 4 is a plot of the dynamic storage modulus versus temperature for Examples 6-10 as determined using a Rheometrics Solid Analyzer RSA-II.

Figure 5 is a plot of the dynamic storage modulus versus temperature for Examples 6-10 as predicted based on weight average contributions of the component materials.

Figure 6 is a plot of the dynamic complex viscosity versus shear rate for Examples 6-10 as determined using a Rheometrics Rheometer RMS-800 at 190°C.

Figure 7 is a plot of the dynamic storage modulus versus temperature for Inventive Examples 16 and 18 and Comparative Runs 17, 19 and 20 as determined using a Rheometrics Solid Analyzer RSA-II.

Figure 8 is a plot of the dynamic complex viscosity versus shear rate for Examples 11-15 as determined using a Rheometrics Rheometer RMS-800 at 190°C.

Figure 9 is a plot of the dynamic storage modulus versus temperature for Inventive Examples 11, 22 and 23, Comparative Runs 12, 24 and 25 as determined using a Rheometrics Solid Analyzer RSA-II.

Figure 10 is a plot of the Haake torque response versus time for Comparative Run 17 at 240°C as determined using Haake torque mixer.

Figure 11 is a plot of the Haake torque response versus time for Inventive Example 16 at 240°C as determined using Haake torque mixer.

Figure 12 is a plot of the Haake torque response versus time for Example 22 at 240°C as determined using Haake torque mixer.

Figure 13 is a plot of the dynamic storage modulus versus temperature for Examples 7, 23-26 as determined using a Rheometrics Solid Analyzer RSA-II.

The novel thermoelastic blend composition is characterized as having (a) storage moduli throughout the range of -26°C to 24°C of less than 3.5 x 10⁹ dynes/cm², (b) a ratio of storage modulus at -26°C to storage modulus at 24°C of less than 4, and (c) storage moduli at -26°C and 24°C 0.2 to 3 times higher than the storage moduli at -26°C and 24°C, respectively, of the neat block copolymer portion of the composition.

The styrene block copolymer has block segments of styrenic units and block segments of rubber monomer units such as butadiene, isoprene, hexadiene, pentadiene, octadiene, ethylene/propylene and ethylene/butene. The substantially inert thermoelastic ethylene interpolymer is a homogeneously branched ethylene interpolymer having a single DSC melting point, and more preferably a substantially linear ethylene polymer characterized as having:
(a) a melt flow ratio, I₁₀/I₂, ≥ 5.63,
(b) a molecular weight distribution, M_{w}/Mₙ, defined by the equation:${\text{M}}_{\text{w}} {\text{/M}}_{\text{n}} {\text{≤ (I}}_{\text{10}} {\text{/I}}_{\text{2}} \text{) - 4.63,}$ and
(c) a critical shear rate at the onset of surface melt fracture of at least 50 percent greater than the critical shear rate at the onset of surface melt fracture of a comparative linear ethylene polymer having about the same I₂ and M_{w}/Mₙ.

The term "interpolymer" is used herein to indicate a copolymer, or a terpolymer, or the like, where, at least one other comonomer is polymerized with ethylene to make the interpolymer.

The term "thermoplastic" is used herein to indicate polymers or polymer compositions that are substantially thermally extrudable or deformable albeit relatively aggressive conditions may be required.

The term "thermoelastic" is used herein to mean a thermoplastic resin having elastic properties, wherein elastic properties means the resin has a thin film (that is, ≤ 4 mils (1 mil = 25.4 µm)) one percent secant modulus of less than 15,000 psi (1 psi = 6.89 kPa), or an elongation at break of greater than 450 percent, or the following dynamic mechanical storage modulus (E') properties:
(a) storage moduli in the range of -26°C to 24°C of less than 5 x 10⁹ dynes/cm² (1 dyn = 10⁻⁵ N), and
(b) a ratio of storage modulus at -26°C to storage modulus at 24°C of less than 8.

The term "elastomeric" or "elastomer" is used herein to mean a material or composition having dynamic mechanical storage moduli (E') in the range of -26°C to 24°C of less than 3.5 x 10⁹ dynes/cm², and a ratio of storage modulus at -26°C to storage modulus at 24°C of less than 4, wherein a "perfectly elastic" material would have a ratio of 1.

The term "substantially inert thermoelastic extender" is used herein to mean a thermoelastic polymer that at specified addition amounts does not substantially alter either the elasticity, rheology, high temperature serviceability or hardness that is characteristic of the neat block copolymer that is admixed with the thermoelastic polymer to prepare the novel composition of the present invention. The effect of the select thermoelastic polymer is such that the novel composition is characterized as having (1) storage moduli at -26°C and 24°C no less than 0.2 times lower and no more than 3 times higher than the storage moduli at -26°C and 24°C of the respective neat block copolymer (that is, storage moduli of the composition at -26°C and 24°C is 0.2 to 3 times higher than the storage moduli at -26°C and 24°C, respectively, of the neat block copolymer portion of the composition), (2) a dynamic complex viscosity the throughout the shear rate range of 10 to 100 1/sec of 0 to 50 percent lower than the respective neat block copolymer, and (3) less than or equal to ± 3 units difference in Shore A hardness (as measured by ASTM-D2240 when compared to the respective neat block copolymer.

Suitable substantially inert thermoelastic extenders for use in preparing the thermoplastic elastomeric compositions of the present invention are the ethylene interpolymers of the invention. The ethylene interpolymers also contain at least one C₃-C₂₀ α-olefin.

The terms "ultra low density polyethylene" (ULDPE), "very low density polyethylene" (VLDPE) and "linear very low density polyethylene" (LVLDPE) have been used interchangeably in the polyethylene art to designate the polymer subset of linear low density polyethylenes having a density less than or equal to 0.915 g/cc. The term "linear low density polyethylene" (LLDPE) is then applied to those linear polyethylenes having a density above 0.915 g/cc. Only ethylene interpolymers having a polymer density less than 0.905 g/cc are a part of the present invention. As such, the family known as LLDPE is not considered a part of the present invention although such may be employed to affect other enhancements.

The terms "heterogeneous" and "heterogeneously branched" are used herein in the conventional sense in reference to a linear ethylene interpolymer having a comparatively low short chain branching distribution index. The short chain branching distribution index (SCBDI) is defined as the weight percent of the polymer molecules having a comonomer content within 50 percent of the median total molar comonomer content. The short chain branching distribution index of polyolefins that are crystallizable from solutions can be determined by well-known temperature rising elution fractionation techniques, such as those described by Wild et al., Journal of Polymer Science, Poly, Phys, Ed., Vol. 20, p. 441 (1982), L. D. Cady, "The Role of Comonomer Type and Distribution in LLDPE Product Performance," SPE Regional Technical Conference, Quaker Square Hilton, Akron, Ohio, October 1-2, pp. 107-119 (1985), or US Patent 4,798,081. Heterogeneously branched linear ethylene interpolymers typically have a SCBDI less than 30 percent.

Commercial examples of heterogeneously branched linear interpolymers suitable for use in the present invention include ATTANE ULDPE polymers supplied by the Dow Chemical Company and FLEXOMER VLDPE polymers supplied by Union Carbide Corporation. However, heterogeneously branched ethylene interpolymers are not a part of the present invention.

The ethylene interpolymers of the invention for useful admixing with block copolymers can be linear ethylene interpolymers, but are preferably selected from the class of ethylene interpolymers which have parameter vii. The linear ethylene interpolymers useful for admixing with block copolymers to prepare the thermoplastic elastomeric composition of the present invention are ethylene polymers which do not have long chain branching, but do have short chain branches derived from the comonomer polymerized into the interpolymer which are homogeneously distributed both within the same polymer chain and between different polymer chains. That is, these linear ethylene interpolymers have an absence of long chain branching just as is the case for the linear low density polyethylene polymers or linear high density polyethylene polymers made using uniform branching distribution polymerization processes as described, for example, by Elston in US 3,645,992.

The homogeneously branched linear ethylene interpolymers are not high pressure, free-radical initiated polyethylene which is well-known to those skilled in the art to have numerous long chain branches, nor are they traditional heterogeneously branched linear low density polyethylene.

The preparation of homogeneously branched linear ethylene/α-olefin interpolymers is not a critical aspect of the present invention. Homogeneously branched linear ethylene/α-clefin interpolymers can be prepared in conventional polymerization processes using Ziegler-type catalysts such as, for example, zirconium and vanadium catalyst systems as well as using metallocene catalyst systems such as, for example, those based on hafnium. Ewen et al. disclosure in U.S. Pat. 4,937,299 and Tsutsui et al. disclosure in U.S. Pat. 5,218,071 are illustrative.

Commercial examples of homogeneously branched linear interpolymers include TAFMER polymers supplied by the Mitsui Chemical Company and EXACT polymers supplied by Exxon Chemical Company. However, only those interpolymers that are characterized as having a SCBDI greater than 50 and a single DSC melt point are suitable for use in the present invention.

The ethylene interpolymers used in the present invention are herein defined as in US Patent 5,272,236 and in US Patent 5,278,272. The substantially linear ethylene interpolymers useful for inertly extending styrene block copolymers are those in which the comonomer is randomly distributed within a given interpolymer molecule and wherein substantially all of the interpolymer molecules have the same ethylene/comonomer ratio within that interpolymer.

The ethylene interpolymers used in the present invention are a unique class of compounds that are a completely different class of homogeneously branched ethylene polymers. They differ substantially from the well-known class of conventional homogeneously branched linear ethylene interpolymers described by Elston in US Patent 3,645,992, and moreover, they are not in the same class as conventional heterogeneous Ziegler polymerized linear ethylene polymers (for example, ultra low density polyethylene, linear low density polyethylene or high density polyethylene made, for example, using the technique disclosed by Anderson et al. in US Patent 4,076,698), nor are they in the same class as high pressure, free-radical initiated highly branched high pressure polyethylenes such as, for example, low density polyethylene (LDPE), ethylene-acrylic acid (EAA) copolymers and ethylene-vinyl acetate (EVA) copolymers.

The ethylene interpolymers useful in this invention have excellent processability, even though they have relatively narrow molecular weight distribution. Surprisingly, the melt flow ratio (I₁₀/I₂) of the substantially linear ethylene interpolymers can be varied widely and essentially independently of the polydispersity index (that is, the molecular weight distribution, M_{w}/Mₙ). This surprising behavior is completely contra to homogeneously branched linear ethylene interpolymers such as those described, for example, by Elston in US Patent 3,645,992 and heterogeneously branched conventional Ziegler polymerized linear polyethylene interpolymers such as those described, for example, by Anderson et al. in U. S. Patent 4,076,698. Unlike, substantially linear ethylene interpolymers, linear ethylene interpolymers (whether homogeneously or heterogeneously branched) have rheological properties such that as the polydispersity index increases, the I₁₀/I₂ value also increases.

Long chain branching can be determined by conventional techniques known in the industry such ¹³C nuclear magnetic resonance (NMR) spectroscopy techniques using, for example, the method of Randall (Rev. Macromol. Chem. Phys., C29 (2&3), p. 285-297). Two other methods are gel permeation chromatography coupled with a low angle laser light scattering detector (GPC-LALLS) and gel permeation chromatography coupled with a differential viscometer detector (GPC-DV). The use of these techniques for long chain branch detection and the underlying theories have been well documented in the literature. See, for example, Zimm, G.H. and Stockmayer, W.H., J. Chem. Phys., 17, 1301 (1949) and Rudin, A., Modern Methods of Polymer Characterization, John Wiley & Sons, New York (1991) pp. 103-112.

A. Willem deGroot and P. Steve Chum, both of The Dow Chemical Company, at the October 4, 1994 conference of the Federation of Analytical Chemistry and Spectroscopy Society (FACSS) in St. Louis, Missouri, presented data demonstrating that GPC-DV is a useful technique for quantifying the presence of long chain branches in substantially linear ethylene interpolymers. In particular, deGroot and Chum found that the level of long chain branches in substantially linear ethylene homopolymer samples measured using the Zimm-Stockmayer equation correlated well with the level of long chain branches measured using ¹³C NMR.

Further, deGroot and Chum found that the presence of octene does not change the hydrodynamic volume of the polyethylene samples in solution and, as such, one can account for the molecular weight increase attributable to octene short chain branches by knowing the mole percent octene in the sample. By deconvoluting the contribution to molecular weight increase attributable to 1-octene short chain branches, deGroot and Chum showed that GPC-DV may be used to quantify the level of long chain branches in substantially linear ethylene/octene function of Log(GPC Weight Average Molecular Weight) as determined by GPC-DV illustrates that the long chain branching aspects (but not the extent of long branching) of substantially linear ethylene polymers are comparable to that of high pressure, highly branched low density polyethylene (LDPE) and are clearly distinct from ethylene polymers produced using Ziegler-type catalysts such as titanium complexes and ordinary homogeneous catalysts such as hafnium and vanadium complexes.

Suitable unsaturated comonomers useful for polymerizing with ethylene to prepare suitable ethylene interpolymers are ethylenically unsaturated monomers. Such comonomers are C₃-C₂₀ α-olefins such as propylene, isobutylene, 1-butene, 1-hexene, 4-methyl-1-pentene, 1-heptene, 1-octene, 1-nonene, 1-decene. Preferred comonomers include propylene, 1-butene, 1-hexene, 4-methyl-1-pentene and 1-octene, and 1-octene is especially preferred. Other monomers that can be polymerized with ethylene in addition to at least one C₃-C₂₀ α-olefin include styrene, halo- or alkyl-substituted styrenes, tetrafluoroethylenes, vinylbenzocyclobutanes, butadienes, isoprenes, pentadienes, hexadienes, octadienes, and cycloalkenes, for example, cyclopentene, cyclohexene and cyclooctene. The ethylene interpolymer of the invention is a copolymer, wherein ethylene is copolymerized with one C₃-C₂₀ α-olefin. Most preferably, the this ethylene interpolymer is a copolymer of ethylene and 1-octene.

The density of the ethylene interpolymers for use in the present invention, as measured in accordance with ASTM D-792, is generally in the range from 0.855 grams/cubic centimeter (g/cc) to 0.905 g/cc, preferably 0.86 g/cc to 0.89 g/cc, more preferably 0.865 g/cc to 0.885 g/cc. The density limitation is critical for obtaining the required compatibility and inertness of the ethylene interpolymer. At densities above 0.905 g/cc, ethylene interpolymers are generally non-elastomeric. At densities below 0.855 g/cc, the interpolymer is fairly tacky and difficult to process and handle.

The molecular weight of the ethylene interpolymers is conveniently indicated using a melt index measurement according to ASTM D-1238, Condition 190°C/2.16 kilogram (kg), formerly known as "Condition E" and also known as I₂. Melt index is inversely proportional to the molecular weight of the polymer. Thus, the higher the molecular weight, the lower the melt index, although the relationship is not linear. The melt index for the ethylene interpolymers useful herein is generally from 0.01 gram/10 minutes (g/10 min.) to 100 g/10 min., preferably from 0.1 g/10 min. to 40 g/10 min., and especially from 1 g/10 min. to 10 g/10 min.

Other measurements useful in characterizing the molecular weight of ethylene interpolymers involve melt index determinations with higher weights, such as, for common example, ASTM D-1238, Condition 190°C/10 kg (formerly known as "Condition N" and also known as I₁₀). "Melt flow ratio" is defined herein as the ratio of a higher weight melt index determination to a lower weight determination, and for measured I₁₀ and the I₂ melt index values, the melt flow ratio is conveniently designated as I₁₀/I₂. The I₁₀/I₂ of both heterogeneous and homogeneously branched linear ethylene interpolymers is generally greater than 7.

Unlike the linear ethylene interpolymers used in the present invention which possess no substantial long chain branching, for the ethylene interpolymers used herein, the melt flow ratio actually indicates the degree of said branching, that is, the higher the I₁₀/I₂ melt flow ratio, the more branching in the polymer. The I₁₀/I₂ ratio of the ethylene interpolymers is at least 5.63, and especially from 5.63 to 20, and most especially from 6 to 15.

The "rheological processing index" (PI) which is defined herein as the apparent viscosity in kpoise of a polymer measured by a gas extrusion rheometer (GER), can also be used to distinguish the ethylene interpolymers of claim 1. The gas extrusion rheometer is described by M. Shida, R.N. Shroff and L.V. Cancio in Polymer Engineering Science, Vol. 17, No. 11, p. 770 (1977), and in "Rheometers for Molten Plastics" by John Dealy, published by Van Nostrand Reinhold Co. (1982) on pp. 97-99. GER experiments are performed at a temperature of 190°C, at nitrogen pressures between 250 to 5500 psig (17-379 bars) using a 0.754 mm diameter, 20:1 L/D die with an entrance angle of 180°. For the ethylene polymers used herein, the PI is the apparent viscosity (in kpoise) of a material measured by GER at an apparent shear stress of 2.15 x 10⁶ dyne/cm². The unique ethylene interpolymers described herein preferably have a PI in the range of 0.01 kpoise to 50 kpoise, preferably 15 kpoise or less. The substantially linear ethylene interpolymers used herein have a PI less than or equal to 70 percent of the PI of a comparative linear ethylene interpolymer (for example, a homogeneously branched linear interpolymer as described by Elston in US Patent 3,645,992, or supplied by Exxon Chemical Company as EXACT, or supplied by Mitsui Chemical Company as TAFMER) having the same I₂ and M_{w} /Mₙ.

To more fully characterize the unique rheological behavior of ethylene interpolymers of the invention, S. Lai and G.W. Knight recently introduced (ANTEC '93 Proceedings, INSITE™ Technology Polyolefins (ITP) - New Rules in the Structure/Rheology Relationship of Ethylene α-Olefin Copolymers, New Orleans, La., May 1993) another rheological measurement, the Dow Rheology Index (DRI), which expresses a polymer's "normalized relaxation time as the result of long chain branching." DRI ranges from 0 for polymers which do not have any measurable long chain branching (for example, TAFMER and EXACT products) to 15 and is independent of melt index. In general, for low to medium pressure ethylene polymers (particularly at lower densities) DRI provides improved correlations to melt elasticity and high shear flowability relative to correlations of the same attempted with melt flow ratios, and for the ethylene interpolymers of this invention, DRI is preferably at least 0.1, and especially at least 0.5, and most especially at least 0.8. DRI can be calculated from the equation:${\text{DRI = (3652879 * τ}}_{\text{o}} {\text{}}^{\text{1.00649}} {\text{/η}}_{\text{o}} \text{-1)/10}$ where τₒ is the characteristic relaxation time of the material and ηₒ is the zero shear viscosity of the material. Both τₒ and ηₒ are the "best fit" values to the Cross equation, that is${\text{η/η}}_{\text{o}} \text{= 1/(1 +(} {\text{γ}}^{̇} {\text{* τ}}_{\text{o}} {\text{)}}^{\text{1-n}} \text{)}$ where **n** is the power law index of the material, and η and γ are the measured viscosity and shear rate, respectively. Baseline determination of viscosity and shear rate data are obtained using a Rheometrics Mechanical Spectrometer (RMS-800) under dynamic sweep mode from 0.1 to 100 radians/second at 160° C and a Gas Extrusion Rheometer (GER) at extrusion pressures from 1,000 psi to 5,000 psi (corresponding shear stress from 0.086 to 0.43 MPa) using a 0.754 millimeter diameter, 20:1 L/D die at 190° C. Specific material determinations can be performed from 140 to 190° C as required to accommodate melt index variations.

An apparent shear stress versus apparent shear rate plot is used to identify the "melt fracture" phenomena which pertains to surface irregularities. According to Ramamurthy in the Journal of Rheology, 30(2), 337-357, 1986, above a certain critical shear rate, the observed extrudate irregularities may be broadly classified into two main types: surface melt fracture and gross melt fracture.

Surface melt fracture occurs under apparently steady flow conditions and ranges in detail from loss of specular film gloss to the more severe form of "sharkskin." In this disclosure, the onset of surface melt fracture (OSMF) is characterized at the beginning of losing extrudate gloss at which the surface roughness of the extrudate can only be detected by 40x magnification. The critical shear rate at the onset of surface melt fracture for the ethylene interpolymers of the invention is at least 50 percent greater than the critical shear rate at the onset of surface melt fracture of a comparative linear ethylene interpolymer (for example, a homogeneously branched linear interpolymer as described by Elston in US Patent 3,645,992) having the same I₂ and M_{w}/Mₙ.

Gross melt fracture occurs at unsteady extrusion flow conditions, and ranges in detail from regular (alternating rough and smooth, helical) to random distortions. For commercial acceptability, (for example, for use as films, coatings and moldings), surface defects should be minimal, if not absent, for good film/molding quality and overall properties. The critical shear stress at the onset of gross melt fracture for the ethylene interpolymers used in the present invention is greater than 4 x 10⁶ dynes/cm². The critical shear rate at the onset of surface melt fracture (OSMF) and the onset of gross melt fracture (OGMF) will be used herein based on the changes of surface roughness and configurations of the extrudates extruded by a GER.

The distribution of comonomer branches for ethylene interpolymers is characterized by its SCBDI (Short Chain Branch Distribution Index) or CDBI (Composition Distribution Branch Index) and is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, by Wild et al., Journal of Polymer Science, Poly, Phys, Ed., Vol. 20, p. 441 (1982), or in US Patent 4,798,081. The SCBDI or CDBI for the substantially linear ethylene interpolymer and the homogeneously branched linear ethylene interpolymer used in the present invention is preferably greater than 30 percent and especially greater than 50 percent.

The ethylene interpolymer and the linear ethylene interpolymer used in this invention essentially lack a measurable "high density" fraction as measured by the TREF technique. These ethylene interpolymers do not contain a polymer fraction with a degree of branching less than or equal to 2 methyls/1000 carbons.

The "high density polymer fraction" can also be described as a polymer fraction with a degree of branching less than 2 methyls/1000 carbons. Among other benefits, the lack of high density polymer fraction permits enhanced elasticity for the interpolymers themselves and improved compatibility when admixed with the block copolymer of the present invention.

The ethylene interpolymers used in the present invention, and the preferred ethylene interpolymers, are also characterized by a single DSC melting peak. However, for substantially linear ethylene interpolymers having a density in the range of 0.875 g/cc to 0.905 g/cc, the single melting peak may show, depending on DSC equipment sensitivity, a "shoulder" or a "hump" on it's low melting side that constitutes less than 12 percent, typically, less than 9 percent, and more typically less than of 6 percent of the total heat of fusion of the polymer. This artifact is believed to be due to intra-polymer chain variations and is discerned on the basis of the slope of the single melting peak varying monotonically through the melting region of the artifact. Such artifacts occur within 34°C, typically within 27°C, and more typically within 20°C of the melting point of the single melting peak. The single melting peak is determined using a differential scanning calorimeter standardized with indium and deionized water. The method involves 5-7 mg sample sizes, a "first heat" to 180°C which is held for 4 minutes, a cool down at 10°/min. to -30°C which is held for 3 minutes, and heat up at 10°C/min. to 140°C for the "second heat". The single melting peak is taken from the "second heat" heat flow vs. temperature curve. Total heat of fusion of the polymer is calculated from the area under the curve. The heat of fusion attributable to this artifact, if present, can be determined using an analytical balance and weight-percent calculations.

The molecular weight distribution of the ethylene interpolymers used in the present invention are determined by gel permeation chromatography (GPC) on a Waters 150 high temperature chromatographic unit equipped with a differential refractometer and three columns of mixed porosity. The columns are supplied by Polymer Laboratories and are commonly packed with pore sizes of 10³, 10⁴, 10⁵ and 10⁶ Å (1 Å = 0.1 mm). The solvent is 1,2,4-trichlorobenzene, from which 0.3 percent by weight solutions of the interpolymer samples are prepared for injection. The flow rate is 1.0 milliliter/minute and the operating temperature is 140° C with a 100-microliter injection size.

The molecular weight determination with respect to the polymer backbone is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by
Williams and Ward in Journal of Polymer Science, Polymer Letters, Vol. 6, p. 621, 1968, incorporated herein by reference) to derive the following equation:${\text{M}}_{\text{polyethylene}} {\text{= a * (M}}_{\text{polystyrene}} {\text{)}}^{\text{b}} \text{.}$

In this equation, a = 0.4316 and b = 1.0. Weight average molecular weight, M_{w}, is calculated in the usual manner according to the following formula: M_{w} = Σ wᵢ* Mᵢ, where wᵢ and Mᵢ are the weight fraction and molecular weight, respectively, of the i^{th} fraction eluting from the GPC column.

For the ethylene interpolymers used in the present invention (i.e., substantially linear ethylene interpolymers and homogeneously branched linear ethylene polymers), the M_{w}/Mₙ is from 1.5 to 2.5.

Single site polymerization catalysts, e.g., the monocyclo-pentadienyl transition metal olefin polymerization catalysts described by Canich in US Patent 5,026,798 or by Canich in US Patent 5,055,438, or described by Stevens et al. in US Patent 5,064,802, can be used to polymerize the ethylene interpolymers of the invention so long as the catalysts are used consistent with the methods described in U.S. Patent 5,2727,236 and in U.S. Patent 5,278,272. However, ethylene interpolymers of the invention are preferably made by using suitable constrained geometry catalysts, especially constrained geometry catalysts as disclosed in U.S. Patent 5,132,380.

Suitable cocatalysts for use herein include but are not limited to, for example, polymeric or oligomeric aluminoxanes, especially methyl aluminoxane or modified methyl aluminoxane (made, e.g., as described in US Patent 5,041,584, US Patent 4,544,762, US Patent 5,015,749, and/or US Patent 5,041,585 as well as inert, compatible, non-coordinating, ion forming compounds. Preferred cocatalysts are inert, non-coordinating, boron compounds.

The polymerization conditions for manufacturing the ethylene interpolymers used herein are preferably those useful in the solution polymerization process, although the application of the present invention is not limited thereto. Slurry and gas phase polymerization processes are also useful for preparing suitable homogeneously branched interpolymers, provided the proper catalysts and polymerization conditions are employed. Preferably, for substantially linear ethylene interpolymers, the polymerization is performed in a continuous solution polymerization process.

Multiple reactor polymerization processes can also be used in making the ethylene interpolymers of the present invention, such as those processes disclosed in EP Application 93902794.2 and in US Patent 3,914,342. The multiple reactors can be operated in series or in parallel or a combination thereof and/or with different catalysts employed in the different reactors.

The term "block copolymer" is used herein to mean elastomers having at least one block segment of a hard polymer unit and at least one block segment of a rubber monomer unit. However, the term is not intended to include thermoelastic ethylene interpolymers which are, in general, random polymers. Preferred block copolymers contain hard segments of styrenic type polymers in combination with saturated or unsaturated rubber monomer segments. The structure of the block copolymers useful in the present invention is not critical and can be of the linear or radial type, either diblock or triblock, or any combination of thereof. Preferably, the predominant structure is that of triblocks and more preferably that of linear triblocks.

The preparation of the block copolymers useful herein is not the subject of the present invention. Methods for the preparation of such block copolymers are known in the art. Suitable catalysts for the preparation of useful block copolymers with unsaturated rubber monomer units include lithium based catalysts and especially lithium-alkyls. U.S. Pat. No. 3,595,942 describes suitable methods for hydrogenation of block copolymers with unsaturated rubber monomer units to from block copolymers with saturated rubber monomer units. The structure of the polymers is determined by their methods of polymerization. For example, linear polymers result by sequential introduction of the desired rubber monomer into the reaction vessel when using such initiators as lithium-alkyls or dilithiostilbene, or by coupling a two segment block copolymer with a difunctional coupling agent. Branched structures, on the other hand, may be obtained by the use of suitable coupling agents having a functionality with respect to the block copolymers with unsaturated rubber monomer units of three or more. Coupling may be effected with multifunctional coupling agents such as dihaloalkanes or alkenes and divinyl benzene as well as with certain polar compounds such as silicon halides, siloxanes or esters of monohydric alcohols with carboxylic acids. The presence of any coupling residues in the polymer may be ignored for an adequate description of the block copolymers forming a part of the composition of this invention.

Suitable block copolymers having unsaturated rubber monomer units includes, but is not limited to, styrene-butadiene (SB), styrene-isoprene(SI), styrenebutadiene-styrene (SBS), styrene-isoprene-styrene (SIS), α-methylstyrene-butadiene-α-methylstyrene and α-methylstyrene-isoprene-α-methylstyrene.

The styrenic portion of the block copolymer is preferably a polymer or interpolymer of styrene and its analogs and homologs including α-methylstyrene and ring-substituted styrenes, particularly ring-methylated styrenes. The preferred styrenics are styrene and α-methylstyrene, and styrene is particularly preferred.

Block copolymers with unsaturated rubber monomer units may comprise homopolymers of butadiene or isoprene and copolymers of one or both of these two dienes with a minor amount of styrenic monomer. When the monomer employed is butadiene, it is preferred that between 35 and 55 mol percent of the condensed butadiene units in the butadiene polymer block have 1,2 configuration. Thus, when such a block is hydrogenated, the resulting product is, or resembles a regular copolymer block of ethylene and 1-butene (EB). If the conjugated diene employed is isoprene, the resulting hydrogenated product is or resembles a regular copolymer block of ethylene and propylene (EP). Preferred block copolymers with saturated rubber monomer units comprise at least one segment of a styrenic unit and at least one segment of an ethylene-butene or ethylene-propylene copolymer. Preferred examples of such block copolymers with saturated rubber monomer units include styrene/ethylene-butene copolymers, styrene/ethylene-propylene copolymers, styrene/ethylene-butene/styrene (SEBS) copolymers, and styrene/ethylenepropylene/styrene (SEPS) copolymers.

Hydrogenation of block copolymers with unsaturated rubber monomer units is preferably effected by use of a catalyst comprising the reaction products of an aluminum alkyl compound with nickel or cobalt carboxylates or alkoxides under such conditions as to substantially completely hydrogenate at least 80 percent of the aliphatic double bonds while hydrogenating no more than 25 percent of the styrenic aromatic double bonds. Preferred block copolymers are those where at least 99 percent of the aliphatic double bonds are hydrogenated while less than 5 percent of the aromatic double bonds are hydrogenated.

The proportion of the styrenic blocks is generally between 8 and 65 percent by weight of the total weight of the block copolymer. Preferably, the block copolymers contain from 10 to 35 weight percent of styrenic block segments and from 90 to 65 weight percent of rubber monomer block segments, based on the total weight of the block copolymer.

The average molecular weights of the individual blocks may vary within certain limits. In most instances, the styrenic block segments will have number average molecular weights in the range of 5,000 to 125,000, preferably from 7,000 to 60,000 while the rubber monomer block segments will have average molecular weights in the range of 10,000 to 300,000, preferably from 30,000 to 150,000. The total average molecular weight of the block copolymer is typically in the range of 25,000 to 250,000, preferably from 35,000 to 200,000. These molecular weights are most accurately determined by tritium counting methods or osmotic pressure measurements.

Further, the various block copolymers suitable for use in the present invention may be modified by graft incorporation of minor amounts of functional groups, such as, for example, maleic anhydride by any of the methods well known in the art.

Block copolymers useful in the present invention are commercially available, such as, for example, supplied by Shell Chemical Company under the designation of KRATON and supplied by Dexco Polymers under the designation of VECTOR.

Generally, the novel thermoplastic elastomeric composition of the present invention comprises (a) from 50 to 99 percent by weight of the total composition of at least one block copolymer and (b) from 1 to 50 percent by weight of the total composition of at least one ethylene interpolymer. Preferably, the novel composition comprises (a) from 60 to 95, and most preferably, from 70 to 90 percent by weight of the total composition of at least one block copolymer and (b) from 5 to 40, and most preferably, from 10 to 30 percent by weight of the total composition of at least one ethylene interpolymer.

The novel thermoplastic elastomeric compositions of the present invention are further characterized as having:
(a) a storage modulus (E') throughout the range of -26°C to 24°C of less than 3.5 x 10⁹ dynes/cm², more preferably less than 3 x 10⁹ dynes/cm²
(b) a ratio of storage modulus at -26°C to storage modulus at 24°C of less than 4, preferably less than 3, and
(c) storage moduli at -26°C and 24°C 0.2 to 3 times, preferably 0.25 to 2.6 times, more preferably 0.4 to 2.2 times higher than the storage moduli at -26°C and 24°C, respectively, of the neat block copolymer portion of the composition.

Additives such as antioxidants (for example, hindered phenolics (for example, Irganox 1010), phosphites (for example, Irgafos 168)), cling additives (for example, polyisobutylene), antiblock additives, colorants, pigments, waxes, nucleating agents, extender oils, fillers, and tackifers can also be included in the present compositions, to the extent that they do not interfere with the substantial inertness or other enhancements discovered by Applicants.

The compositions of the present invention are compounded by any convenient method, including dry blending the individual components and subsequently melt mixing, either directly in the extruder used to make the finished article, or by pre-melt mixing in a separate extruder or mixer such as, for example, a Haake unit or a Banbury mixer.

The compositions of the present invention can be fabricated into articles such as fibers, films, coatings and moldings by any of the known methods in the art suitable for thermoplastic compositions. The compositions are particularly suitable for preparing fabricated articles from molding operations. Suitable molding operations for forming useful fabricated articles or parts from the novel compositions, including various injection molding processes (for example, that described in Modern Plastics Encyclopedia/89, Mid October 1988 Issue, Volume 65, Number 11, on pp. 264-268, "Introduction to Injection Molding" and on pp. 270-271, "Injection Molding Thermoplastics" blow molding processes (for example, that described in Modern Plastics Encyclopedia/89, Mid October 1988 Issue, Volume 65, Number 11, on pp. 217-218, "Extrusion-Blow Molding") and profile extrusion.

Some of the fabricated articles include sporting goods such as wet suits and golf grips, containers such as for food or other household articles, footwear counters, uppers and soles, automotive articles such as facia, trim and side molding, medical goods such as gloves, tubing, IV bags and artificial limbs, industrial goods such as gaskets and tool grips, personal care items such as elastic films and fibers for diapers, textiles such as nonwoven fabrics, electronic goods such as key pads and cable jacketing, and construction goods such as roofing materials and expansion joint materials.

The present composition is also useful as a compounding ingredient or additive for such uses as asphalt modifications for crack repairing and roofing, polymer processing, impact and surface modifications, sealant and adhesive formulations, oil gel viscosity modifications and rubber extender/binder compounding.

The compositions of the present invention can also be further combined with other natural or synthetic resins to improve other properties. Suitable natural or synthetic resins include, but are not limited to, rubbers, linear low density polyethylene (LLDPE), high density polyethylene (HDPE), low density polyethylene (LDPE), ethylene-vinyl acetate copolymer (EVA), ethylene-carboxylic acid copolymers, ethylene acrylate copolymers, polybutylene (PB), nylons, polycarbonates, polyesters, polypropylene, ethylene-propylene interpolymers such as ethylene-propylene rubber, EPDM, chlorinated polyethylene, thermoplastic vulcanates, polyurethanes, as well as graft-modified olefin polymers, and combinations thereof.

The invention will be further illustrated by means of the following examples without limiting the invention thereto.

### Examples

In various evaluations several different types of block copolymers and thermoelastic polymers were studied to determined their individual and combined properties. Property testing and determinations included elastic and rheology as measured by dynamic mechanical and dynamic rheological techniques, Shore A hardness and processibility and process stability as measured by Haake torque technique. The description of the various block copolymers and thermoelastic polymers that were studied are listed below.

| Polymer | Description | Supplier |
|---|---|---|
| VECTOR 8508 | a styrene-butadiene-styrene block copolymer containing 28 percent styrene by weight and having a melt flow rate of 12 | Dexco Polymers. |
| | | |
| VECTOR 4211 | a styrene-isoprene-styrene block copolymer containing 30 percent styrene by weight and having a melt flow rate of 13 | Dexco Polymers |
| | | |
| KRATON G1650 | a styrene-ethylene-butene-styrene block copolymer containing 29 percent styrene by weight and having a melt flow rate of less than 0.1 | Shell Chemical Company |
| | | |
| ENGAGE EG8100 | a thermoelastic substantially linear ethylene/1-octene copolymer prepared using a constrained geometry catalyst system according to procedures disclosed in US. Patents 5,272,236 and 5,278,236 and having a density of 0.87 g/cc and a melt index, I₂, of 1 g/10 minutes | The Dow Chemical Company |
| | | |
| ENGAGE EG8200 | a thermoelastic substantially linear ethylene/1-octene copolymer prepared using a constrained geometry catalyst system according to procedures disclosed in U.S. Patents 5,272,236 and 5,278,236 and having a density of 0.87 g/cc and a melt index, I₂, of 5 g/10 minutes | The Dow Chemical Company |
| | | |
| TAFMER P0480 | a thermoelastic homogeneously branched linear ethylene/propylene copolymer believed to be prepared using a vanadium catalyst system and having a density of 0.87 g/cc and melt index, I₂, of 1.0 g/10 minutes | Mitsui Chemical Company |
| | | |
| EXACT 3027 | a thermoelastic homogeneously branched linear ethylene/butene copolymer believed to be prepared using a single-site catalyst system and having a melt index, I₂, of 3.2 g/10 minutes and a density of 0.902 g/cc | Exxon Chemical Company |
| | | |
| ATTANE 4203 | a thermoelastic heterogeneously branched linear ethylene/1-octene interpolymer prepared using a conventional Ziegler catalyst system and having a density of 0.905 g/cc and melt index, I₂, of 0.8 g/10 minutes | The Dow Chemical Company |
| | | |
| EVA | thermoelastic ethylene/vinyl acetate (EVA) copolymer containing 18 percent by weight vinyl acetate and having a melt index, I₂, of 3 g/10 minutes and a density of 0.951 g/cc | -- |

### Example 1

In a Buss ko-kneader MDK 46 (15 kg/hour throughput, barrel temperature 220°C, screw temperature 150°C, die temperature 210°C) several thermoplastic elastomeric blend compositions were prepared using Engage EG8100, an ethylene/1-octene copolymer prepared according to the procedures given in U.S. Patent 5,278,272 and having a density of 0.87 g/cc and a melt index (I₂) of 1 g/10 min. (E-1-O) and a Kraton G1650 (S-EB-S triblock) copolymer in the weight ratios 25/75, 50/50, 75/25. The strands of blended extrudate were collected, cut, and dried at 65°C for 6 hours and then compression molded into Izod specimen bars (60 x 12.5 x 3.2 mm). The storage modulus was determined at -30°C and 30°C for each one of the blends as well as for the neat components using dynamic mechanical spectroscopy techniques as outlined in ASTM D-4065. Measurements were made using a Rheometrics model 800 apparatus in solid state torsion rectangular test geometry, for a heating ramp of 2°C/min from -130°C to +50°C, with 0.1 percent torsional strain and 10 rads/sec fixed forced frequency. The samples used were rectangular compression moulded test bars of 2.8 mm x 12.7 mm x 60 mm. The gauge length, that is the distance between the clamps holding the sample during testing, was 46 mm. The results are shown in Table 1:

**Table 1**

| | | Modulus | | |
|---|---|---|---|---|
| Example/ Comparative Run | ENGAGE EG8100/ | -30°C Mpa x 10⁸ | 30°C Mpa x 10⁸ | Ratio Modulus at -30°C |
| | KRATON G1650 Weight Percent | dynes/cm² | dynes/cm² | Modulus at 30°C |
| 1 | 75/25 | 17.2 | 2.97 | 5.99 |
| 2* | 100/0 | 25.6 | 3.06 | 8.36 |
| 3 | 50/50 | 10.5 | 2.35 | 4.46 |
| 4* | 25/75 | 6.14 | 1.86 | 3.30 |
| 5* | 0/100 | 3.15 | 1.26 | 2.50 |

| | | | | |
|---|---|---|---|---|
| *Comparative example only; not an example of the present invention. | | | | |

These data show that the -30°C storage modulus and the ratio of the storage moduli at the two temperatures of the compositions do not increase as rapidly as would be predicted based on the weighted contributions of the two components. The compositions are more elastomeric than predicted. A low modulus ratio indicates that a polymeric composition possesses a more constant rigidity over the selected temperature range, which is important for products that should maintain shape and performance over a wide temperature range.

According to the same procedure as in Example 1 several compositions were made to determine the transparency and certain physical properties thereof. The transparency was determined by visual inspection designating on a qualitative scale the number 0 to opaque blends and the number 5 to the S-EB-S copolymer. Shore D Hardness was determined according to DIN 53505 (ISO 868). The Tensile properties were determined according to ASTM 683-84 on type 4 dogbone specimens, size 12.7 x 3.2 x 170 mm. The test specimens were compression molded at 190°C. The test speed was 50 mm/mm. The Secant Modulus is defined as the tangent of the stress strain curve at 2 percent strain. The Yield Stress is defined as the stress at the point where the tangent ( of the stress/strain curve is 0.301. The peak stress is defined as the maximum stress in a tensile stress-strain curve before or at rupture. The percentage elongation is the maximum elongation obtained at rupture. The results are shown in Table 2.

**Table 2**

| Example / Comparative Run | Transparency | Shore D | Yield Stress (MPa) | Peak Stress (MPa) | Secant Modulus (Mpa) | Percent Elongation |
|---|---|---|---|---|---|---|
| 1 | 4 | 10 | 0.6 | 3.3 | 4.3 | >600 |
| 2* | 5 | 8 | 0.3 | 2.9 | 3.6 | >600 |
| 3 | 4 | 10 | 0.7 | 2.8 | 5.8 | >600 |
| 4* | 4 | 11 | 1.0 | 4.6 | 7.9 | >600 |
| 5* | 3 | 12 | 1.2 | 5.8 | 9.7 | >600 |

| | | | | | | |
|---|---|---|---|---|---|---|
| *Comparative example only; not an example of the present invention. | | | | | | |

The data in Table 2 show that at 50 percent or less of the substantially linear interpolymer a reasonably low Shore hardness is maintained, whereas the peak stress is fairly constant. All the compositions are more transparent than the substantially linear interpolymer itself. Especially the compositions containing no more than 50 weight percent of substantially liner interpolymer showed the low peak and yield stress values that are desired for elastomeric materials.

In another evaluation, blends of the various thermoelastic polymer with styrene block copolymers were prepared using a Haake mixer. Blends of thermoelastic polymers with VECTOR 8508 and VECTOR 4211 were prepared at 170°C for 7 minutes at 60 rpm. The resins were dry blended before introduction into a Haake mixer. Antioxidant (Irganox B900) at 2000 ppm level was also added to the Haake mixing bowl. Blends of thermoelastic polymer with KRATON G1650 were prepared at 220°C for 7 minutes at 60 rpm. A thin compression molded plaque of partially fused KRATON G1650 was prepared at 200°C using a melt press. Strips of the plaque were added to the molten thermoelastic polymer already present in the mixing bowl.

Samples for dynamic rheology studies were prepared in the form of circular disks using Haake torque blend compositions or from melt pressed pellets of the block copolymers as controls (that is, no Haake torque exposure). The samples were prepared at 190°C and were air-cooled to ambient room temperature of 23°C.

Samples for dynamic mechanical studies were prepared in the form of thin films (that is, 15-20 mil (3.8-5.1 mm) thick) from the Haake blend or from melt pressed pellets of the block copolymers as controls (that is, no Haake torque exposure). The samples were prepared at 190°C and were cooled at 15°C/min to ambient room temperature of 23°C.

The dynamic rheological properties of the samples were studied using a Rheometrics RMS-800 rheometer. The frequency was varied from 0.1 radians/second to 100 radian/second while the sample/unit temperature was maintained at 190°C in a nitrogen atmosphere. A strain of 15 percent was also used for the dynamic rheology measurement. In a few cases where the viscosity of resins or blend composition were high, the strain was maintained at 5 percent. According to the Cox-Mertz rule, the complex viscosity versus frequency data measured using the dynamic shear rheology was about equivalent to the shear viscosity versus shear rate data, and as such, can provide useful information regarding the rheological properties of the resins and resultant blend compositions.

The dynamic mechanical properties of the samples were studied using Rheometrics Solids analyzer RSA-II. The dynamic mechanical properties of the sample were measured at 5°C increments in a nitrogen atmosphere over a temperature range of -120°C to highest possible temperature at which sample either substantially melts or deforms. The experiments were conducted at a frequency of 10 radians/second and an initial strain of 7.0 x 10⁻⁴ percent. The sample dimensions were measured and were used in the calculations. The gauge length, that is the distance between the damps holding the sample during testing, was 22 mm.

In a Haake mixing bowl, several thermoplastic blend compositions were prepared using ENGAGE EG8200 and VECTOR 8508. The blends consisted of VECTOR 8508 and ENGAGE EG8200 at weight percent ratios of 25/75, 50/50 and 75/25, and were prepared at 170°C and collected from the Haake mixing bowl after a total mixing time of 6 to 7 minutes. The samples were compression molded for dynamic mechanical determinations using the procedure described above.

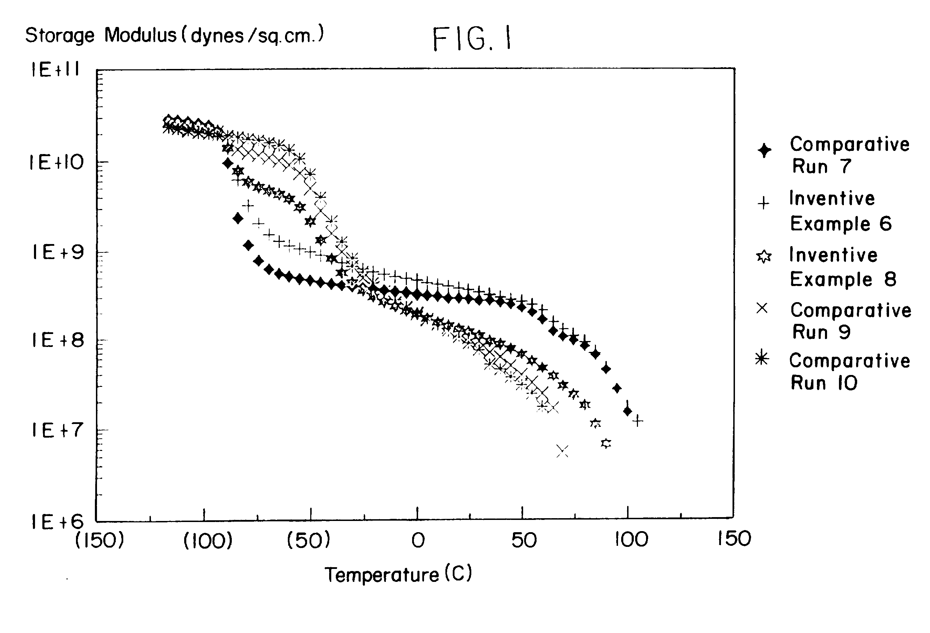

The dynamic mechanical results are shown in Figure 1. The storage modulus data at -26°C and at 24°C, the -26° to 24°C ratio and the storage modulus increase relative to neat VECTOR 8508 are shown in Table 3.

**Table 3**

| Elasticity of Styrene/Butadiene/Styrene Blends | | | | | | |
|---|---|---|---|---|---|---|
| Example/ Comp. Run | Composition | Storage Modulus (E') at -26°C, dynes/cm² | Storage Modulus (E') at 24°C, dynes/cm² | -26°/24°C Storage Modulus Ratio | Ratio of Blend to Neat Copolymer Storage Modulus at -26°C | Ratio of Blend to Neat Copolymer Storage Modulus at 24°C |
| 6 | 75 percent VECTOR 8508 25 percent ENGAGE EG8200 | 6.21x 10⁸ | 3.58x 10⁸ | 1.73 | 1.64 | 1.26 |
| 7* | 100 percent VECTOR 8508 | 3.79x 10⁸ | 2.83x 10⁸ | 1.34 | - | - |
| 8 | 50 percent VECTOR 8508 50 percent ENGAGE EG8200 | 3.50x 10⁸ | 1.19x 10⁸ | 2.94 | 0.92 | 0.42 |
| 9* | 25 percent VECTOR 8508 75 percent ENGAGE EG8200 | 4.92x 10⁸ | 1.02x 10⁸ | 4.82 | 1.30 | 0.36 |
| 10* | 100 percent ENGAGE EG8200 | 5.77x 10⁸ | 8.92x 10⁷ | 6.46 | 1.52 | 0.32 |

| | | | | | | |
|---|---|---|---|---|---|---|
| *Comparative example only; not an example of the present invention. | | | | | | |

The dynamic mechanical data in Figure 1 surprisingly reveals that addition of 25 and 50 weight percent ENGAGE EG8200 to VECTOR 8508 did not substantially alter the high temperature serviceability of the VECTOR 8508 block copolymer. That is, the neat block copolymer (Example 2) and the blend compositions comprising up to 50 weight percent ENGAGE EG8200 (Examples 1 and 3) maintained good integrity as indicated by a stable storage modulus at temperatures at least up to 50°C.

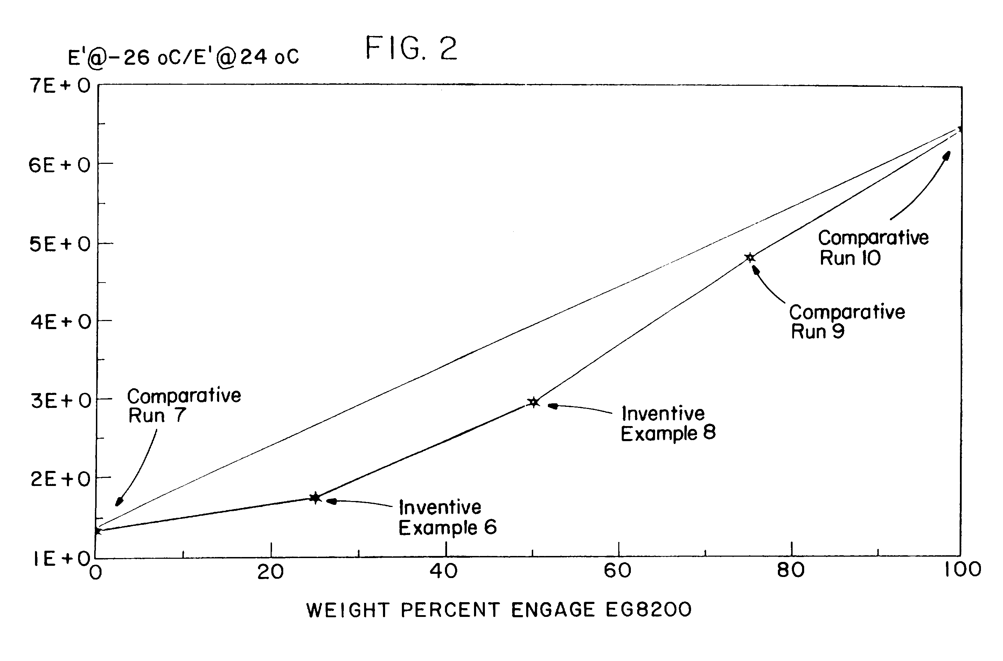

Figure 2 (which indicates the predicted dynamic mechanical response of the compositions based on weight average contributions of the component materials) and Table 1 show that the ratio of storage modulus at -26°C to storage modulus at 24°C did not increase as rapidly as expected based on weight average contribution of the two components. In fact these blend compositions were, surprisingly, more elastic than predicted, especially at a concentration of 25 weight percent ENGAGE EG8200.

Table 3 also indicates that the storage modulus measured at -26°C and 24°C for the 25 weight percent ENGAGE EG8200 blend composition (Inventive Example 6) did not change significantly relative to neat block copolymer VECTOR 8508 at the same temperatures. The storage modulus at -26°C and 24°C for Inventive Examples 6 and 8 was only 0.42 to 1.64 times higher than the storage modulus at -26°C and 24°C of neat VECTOR 8508. Such storage modulus differences are considered insignificant and, thereby, exemplify effective use of ENGAGE EG8200 as an extender for VECTOR 8508.

A low -26° to 24°C storage modulus ratio (that is, less than 4) in combination with stable, low storage moduli (that is, less than 3.5 x 10⁹ dynes/cm²) over the same temperature range indicates that the composition possessed good elasticity in the range of at least -26°C to 24°C. This attribute is important for products that must maintain their shape, integrity and performance over the selected temperature range.

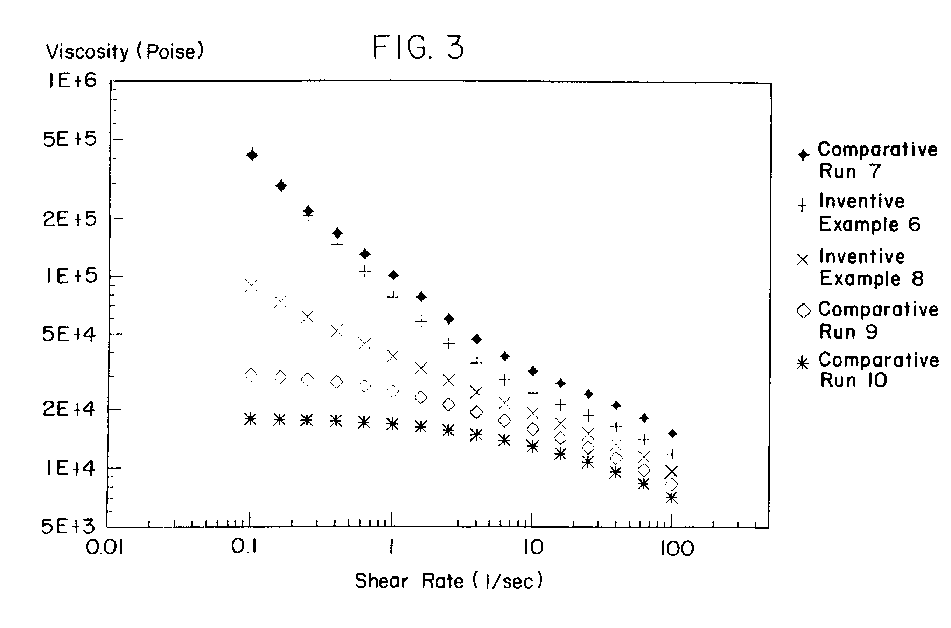

Similar to the dynamic mechanical storage modulus results, Figure 3 indicates the addition of amounts less than 50 weight percent of ENGAGE EG8200 did not substantially alter the dynamic rheological properties of VECTOR 8508, that is, the response was characteristic of the block copolymer and not characteristic of the ethylene interpolymer. Figure 3 also indicates at low shear rates there was essentially no change in dynamic viscosity relative to the neat block copolymer and at high shears rates, there was only a slight decrease in viscosity, particularly when 25 weight percent of ENGAGE EG8200 was admixed with the block copolymer.

By not substantially altering the high temperature serviceability and dynamic mechanical and rheological properties of VECTOR 8508, these results indicate that ENGAGE EG8200 functioned as substantially inert extender in blend combinations with the block copolymers.

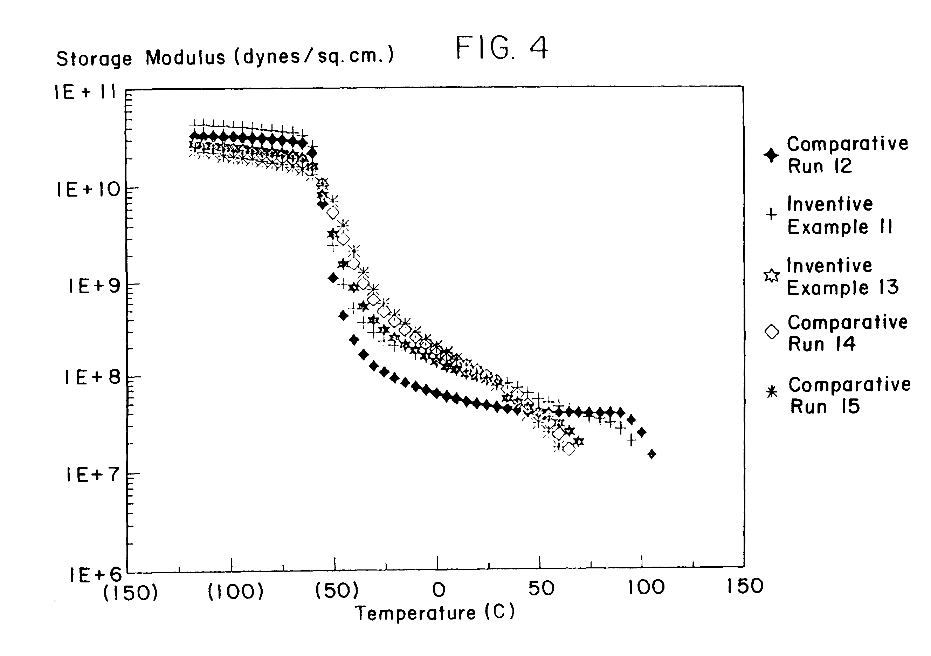

Blends consisting of VECTOR 4211 and ENGAGE EG8200 at weight ratios 25/75, 50/50 and 75/25 were prepared in the same manner as described above for Inventive Examples 6 and 8 and Comparative Runs 7, 9 and 10. The samples were prepared for dynamic mechanical and rheological determinations using the procedure described above. The results are shown in Figures 4, 5 and 6. The storage modulus data at -26°C and at 24°C and the temperature to temperature storage modulus ratio as well as the blend composition to neat block copolymer storage modulus ratio are all shown in Table 4.

**Table 4**

| Elasticity of Styrene/Isoprene/Styrene Blends | | | | | | |
|---|---|---|---|---|---|---|
| Example/ Comp. Run | Composition | Storage Modulus (E') at -26°C, dynes/cm² | Storage Modulus (E') at 24°C, dynes/cm² | -26°/24°C Storage Modulus Ratio | Ratio of Blend to Neat Copolymer Storage Modulus at -26°C | Ratio of Blend to Neat Copolymer Storage Modulus at 24°C |
| 11 | 75 percent VECTOR 4211 25 percent ENGAGE EG8200 | 226x 10⁸ | 8.99x 10⁷ | 2.51 | 2.13 | 1.95 |
| 12* | 100 percent VECTOR 4211 | 1.06x 10⁸ | 4.60x 10 | 2.30 | - - | -- |
| 13 | 50 percent VECTOR 4211 50 percent ENGAGE EG8200 | 2.96x 10⁸ | 8.55x 10⁷ | 3.46 | 2.79 | 1.86 |
| 14* | 25 percent VECTOR 4211 75 percent ENGAGE EG8200 | 4.71x 10⁸ | 9.51x 10⁷ | 4.95 | 4.44 | 2.07 |
| 15* | 100 percent ENGAGE EG8200 | 5.77x 10⁸ | 8.92x 10⁷ | 6.46 | 5.44 | 1.94 |

| | | | | | | |
|---|---|---|---|---|---|---|
| *Comparative example only; not an example of the present invention. | | | | | | |

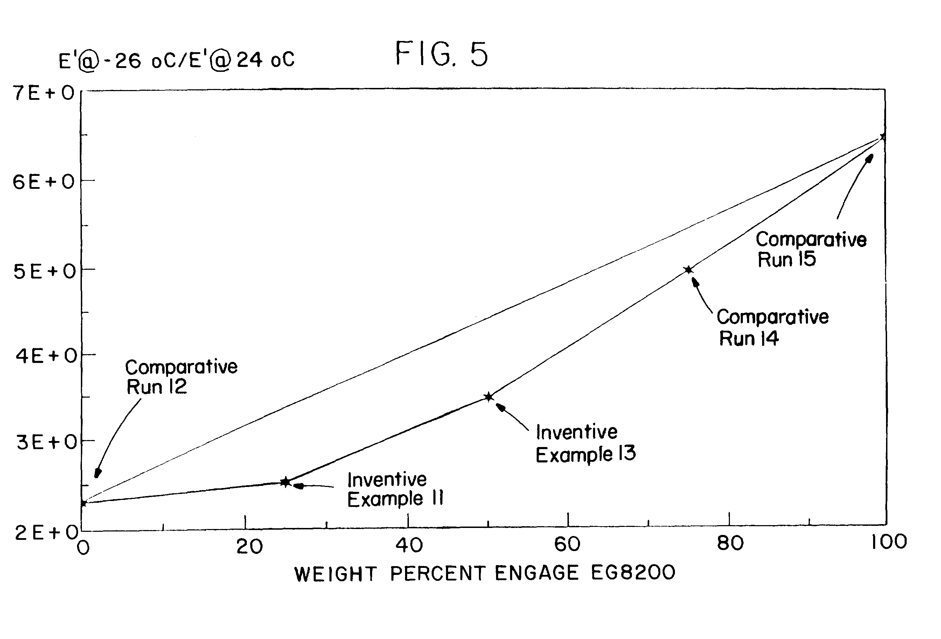

Figure 4 surprisingly reveals that addition of 25 percent and 50 percent ENGAGE EG8200 to VECTOR 4211 did not substantially alter the high temperature serviceability of the block copolymer. Table 4 and Figure 5 show that the ratio of storage modulus at -26°C to storage modulus at 24°C for these samples did not substantially increase as predicted based on the weight percentage contributions of the two components. Similar to the above Inventive Examples 6 and 8, ENGAGE EG8200/VECTOR 4211 blends comprising up to 50 weight percent ENGAGE EG8200 (Inventive Examples 6 and 8) were surprisingly more elastic than expected.

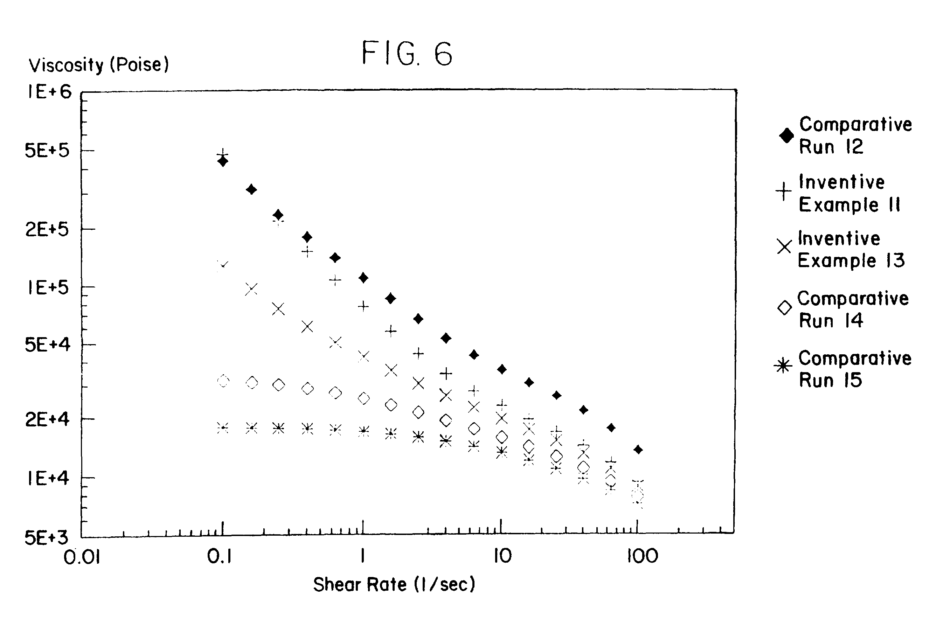

Also, the -24° to 24°C storage modulus ratios of Inventive Examples 11 and 13 was less than 4 and their storage moduli at -26°C and 24°C, which ranged from 1.86 to 2.79 times higher, were not substantially different from that of neat VECTOR 4211. Similar to the dynamic mechanical storage modulus results, Figure 6 indicates the addition of amounts up to 50 weight percent of ENGAGE EG8200 did not substantially alter the dynamic rheological properties of VECTOR 4211, particularly when 25 weight percent of ENGAGE EG8200 was admixed with the block copolymer. These elasticity and rheological results indicate that ENGAGE EG8200 functioned essentially as a substantially inert extender in blend combinations with VECTOR 4211, a styrene/isoprene/styrene block copolymer.

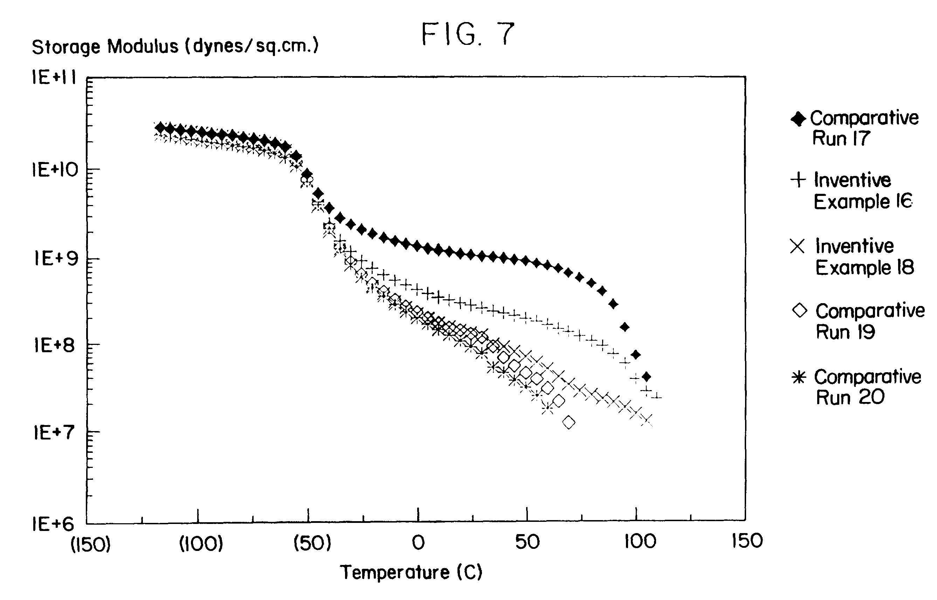

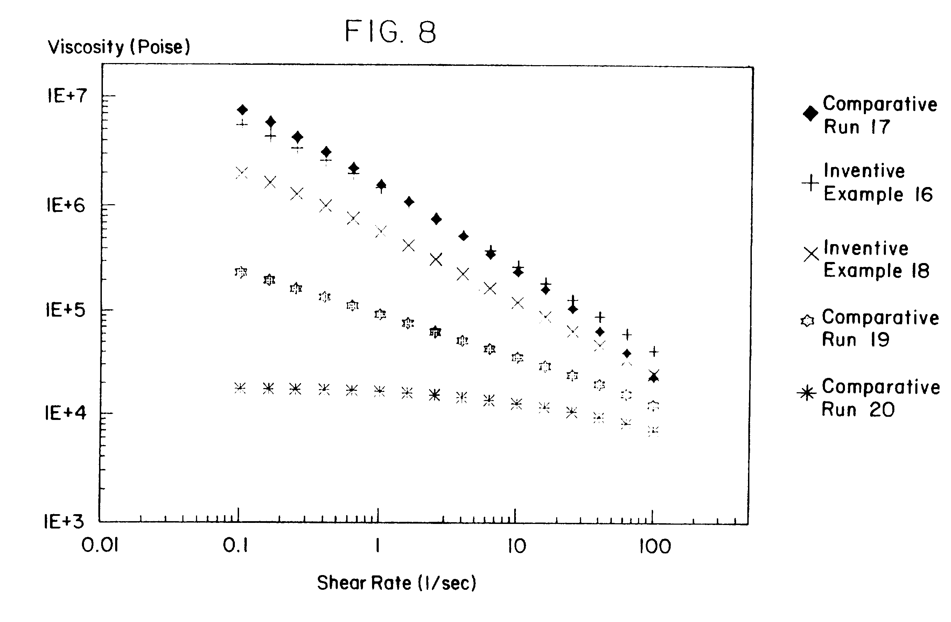

In still another evaluation using the same sample preparation and testing procedures indicated in Inventive Examples 6 and 8 and Comparative Runs 7, 9 and 10 above, similar results were obtained for blend compositions comprising KRATON G-1650 and ENGAGE EG8200. Figures 7 and 8 and Table 5 show that for blend compositions comprising less than 50 weight percent ENGAGE EG8200, the dynamic properties of such blends were substantially unchanged relative to neat KRATON G-1650.

**Table 5**

| Elasticity of Styrene/Ethylene-Butene/Styrene Blends | | | | | | |
|---|---|---|---|---|---|---|
| Example/Comp. Run | Composition | Storage Modulus (E') at -26°C, dynes/cm² | Storage Modulus (E') at 24°C, dynes/cm² | -26°/24°C Storage Modulus Ratio | Ratio of Blend to Neat Copolymer Storage Modulus at -26°C | Ratio of Blend to Neat Copolymer Storage Modulus at 24°C |
| 16 | 75 percent KRATON G1650 25 percent ENGAGE EG8200 | 9.13x 10⁸ | 2.71x 10⁸ | 3.37 | 0.44 | 0.25 |
| 17* | 100 percent KRATON G1650 | 2.08x 10⁹ | 1.06x 10⁹ | 1.96 | -- | -- |
| 18 | 50 percent KRATON G1650 50 percent ENGAGE EG8200 | 5.89x 10⁸ | 1.31x 10⁸ | 4.50 | 0.28 | 0.12 |
| 19* | 25 percent KRATON G1650 75 percent ENGAGE EG8200 | 6.34x 10⁸ | 1.27x 10⁸ | 4.99 | 0.30 | 0.12 |
| 20* | 100 percent ENGAGE EG8200 | 5.77x 10⁸ | 8.92x 10⁷ | 6.46 | 0.28 | 0.08 |

| | | | | | | |
|---|---|---|---|---|---|---|
| *Comparative example only; not an example of the present invention. | | | | | | |

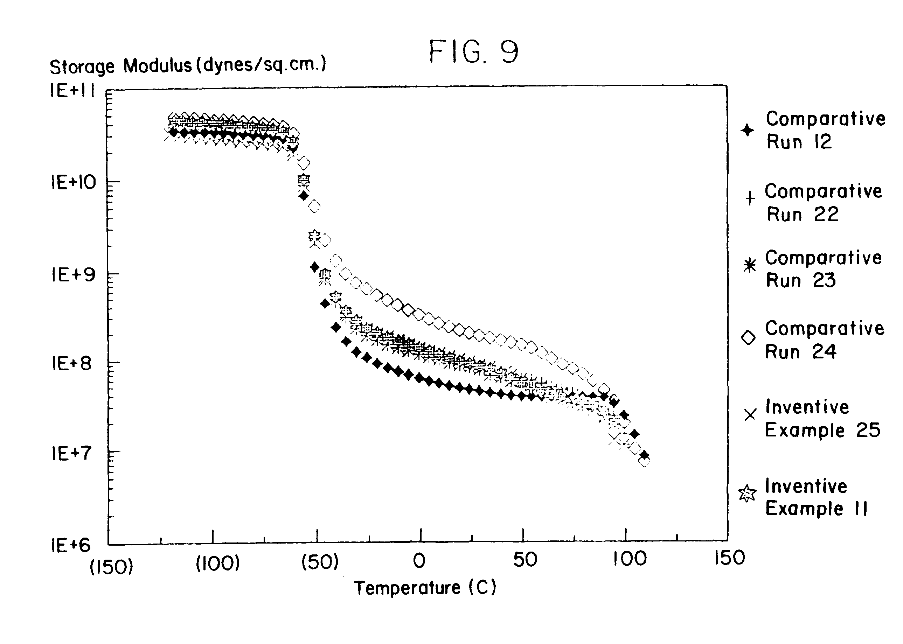

In another evaluation, the above Haake torque sample preparation and dynamic mechanical testing procedures were performed using 25 weight percent of several different thermoelastic polymers in VECTOR 4211 block copolymer. The thermoelastic polymers included ENGAGE EG8200, ATTANE 4203, TAFMER P0480, EXACT 3027 and an 18 weight percent vinyl acetate EVA copolymer. Table 4 shows the description of the blend compositions and their respective storage modulus data. Figure 9 shows the storage modulus versus temperature data for the blend compositions. Figure 9 and Table 4 indicate all the thermoelastic polymers in the evaluation functioned as substantially inert extenders for VECTOR 4211, except the EVA copolymer. While the -26° to 24°C storage modulus ratio of the EVA blend composition (Comparative Run 24) was low and similar to the other thermoelastic blend compositions in the evaluation, the storage modulus of the EVA blend composition at -26°C and 24°C was several times higher (that is, 4.3 and 5.92 times higher) than that for the corresponding neat block copolymer (Comparative Run 12).

**Table 6**

| Blend Composition Descriptions For Various Thermoelastic Polymers at 25 Weight Percent | | | | | | |
|---|---|---|---|---|---|---|
| Example/ Comp. Run | Composition | Storage Modulus (E') at -26°C, dynes/cm² | Storage Modulus (E') at 24°C, dynes/cm² | -26°/24°C Storage Modulus Ratio | Ratio of Blend to Neat Copolymer Storage Modulus at -26°C | Ratio of Blend to Neat Copolymer Storage Modulus at 24°C |
| 11 | 75 percent VECTOR 4211 25 percent ENGAGE EG8200 | 2.26x 10⁸ | 8.99x 10⁷ | 2.51 | 2.13 | 1.95 |
| 12* | 100 percent VECTOR 4211 | 1.06x 10⁸ | 4.60x 10⁷ | 2.30 | -- | -- |
| 22* | 75 percent VECTOR 4211 25 percent ATTANE 4203 | 2.02x 10⁸ | 859x 10⁷ | 235 | 1.91 | 1.87 |
| 23* | 75 percent VECTOR 4211 25 percent TAFMER P0480 | 1.87x 10⁸ | 8.12x 10⁷ | 230 | 1.76 | 1.77 |
| 24* | 75 percent VECTOR 4211 25 percent EVA(18 percent VA) | 6.27x 10⁸ | 1.98x 10⁸ | 3.17 | 5.92 | 4.30 |
| 25 | 75 percent VECTOR 4211 25 percent EXACT 3027 | 2.20x 10⁸ | 933x 10⁷ | 236 | 2.07 | 2.03 |

| | | | | | | |
|---|---|---|---|---|---|---|
| *Comparative example only; not an example of the present invention. | | | | | | |

Table 7 below indicates that although ATTANE 4403 did not appear to substantially alter the storage modulus/elasticity of block copolymers, it did substantially alter the hardness of the VECTOR 8508 block copolymer at 25 weight percent addition levels and, as such, like EVA copolymers, is not a substantially inert thermoelastic extender within the purview of the present invention. Changes in Shore A hardness greater than ± 3 units (as measured by ASTM-D2240) is considered to be a substantial alteration. The inability of ATTANE 4203 to perform as an inert extender is believed to be due to its higher polymer density (that is, 0.905 g/cc) abd general lack of compositional homogeneity. Similarly, at least for compositions comprised of block copolymers with unsaturated rubber monomer segments, as the density of the ethylene interpolymer used in the present invention decreased, proportionally higher amounts of the ethylene interpolymer were permissible while still maintaining the substantial inertness discovered by the Applicants. See Inventive Examples 8 and 13.

**Table 7**

| Effect of Thermoelastic Polymers on Block Copolymer Hardness | | |
|---|---|---|
| Example/ Comp. Run | Composition | Shore A Hardness |
| 6 | 75 percent VECTOR 8508 25 percent ENGAGE EG8200 | 73 |
| 7* | 100 percent VECTOR 8508 | 74 |
| 25* | 75 percent VECTOR 8508 25 percent TAFMER P0480 | 73 |
| 26* | 75 percent VECTOR 8508 25 percent ATTANE 4203 | 78 |

| | | |
|---|---|---|
| *Comparative example only; not an example of the present invention. | | |

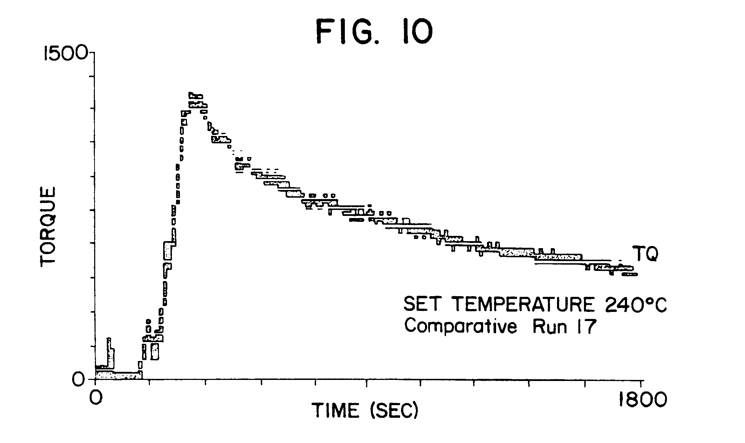

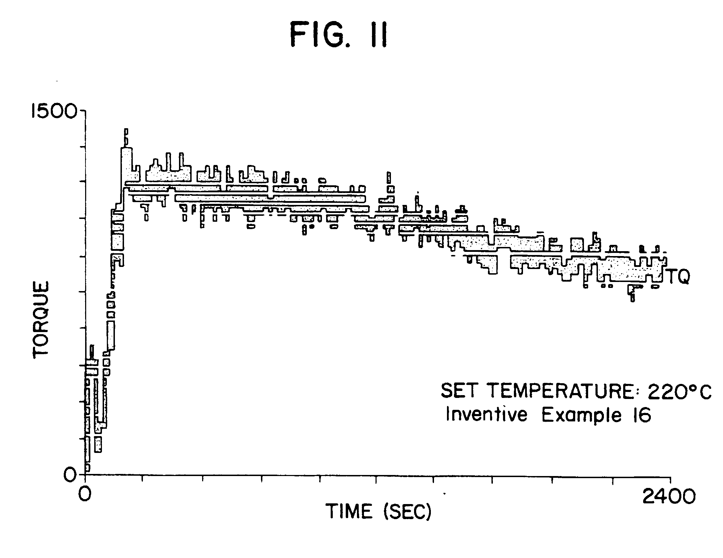

In still another evaluation, the response of KRATON G1650 to thermal processing was determined in a Haake torque mixer. As shown in Figures 10 and 11, Haake torque evaluation results indicated that ENGAGE EG8200 functioned as a fusion promoter and substantially improved the processability of KRATON G-1650. Figure 10 shows the Haake torque of neat KRATON G1650 at 240°C. At 230°C, neat block copolymer KRATON G1650 (Comparative Run 12) did not melt in a Haake torque mixer. At 240°C, an induction delay time of 3 minutes was required to melt and fuse KRATON G1650 into a molten processable sample. In addition to the increased energy requirement, Figure 10 indicates an additional processing disadvantage. As a consequence of the delay time, Figure 10 indicates the neat block copolymer was rendered more susceptible to thermal scission (instability) as manifested by significant torque decreases over the test period.

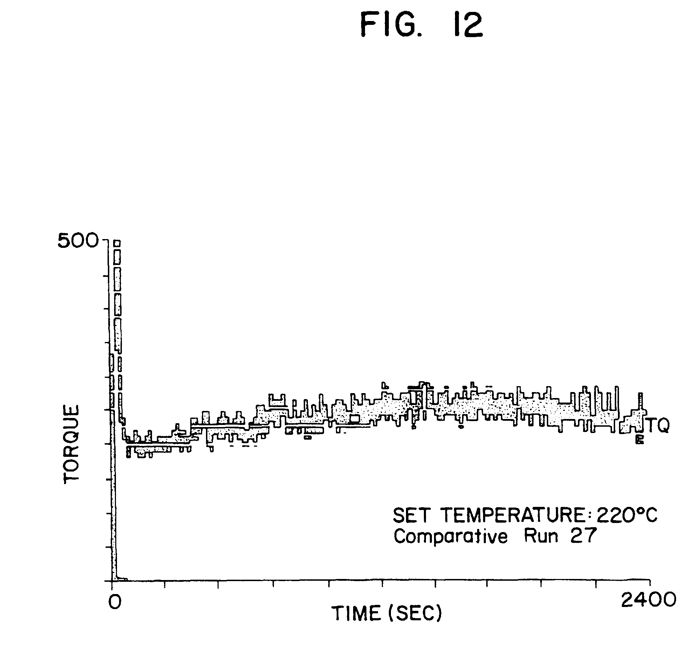

However, Figure 11 indicates the addition of 25 weight percent of ENGAGE EG8200 (Inventive Example 16 blend composition) allowed melting and fusion after 1 minute of processing at a lower processing temperature, that is, below 220°C. Figure 11 also indicates the resultant blend composition was more thermally stable as indicated by a moderate torque increase over an extended test period. Figure 12, where the blend composition comprises 50 weight percent TAFMER P0480 in KRATON G1650 (Comparative Run 27), indicates similar results regarding fusion and processibility enhancement were obtained using TAFMER P0480 in regards to promoting processability without an extended induction period, however, the relative lower torque values suggested no real fusion occurred.

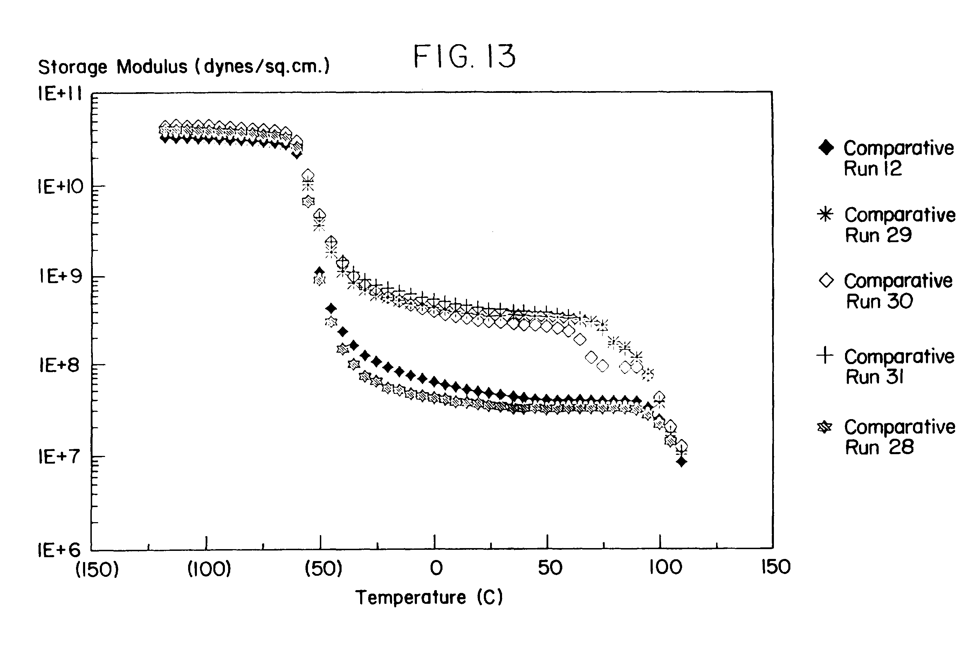

In still another evaluation, the dynamic mechanical properties of VECTOR 4211 was repetitively determined with and without exposure to a Haake torque mixer as described in the blend composition sample preparation procedures above. Table 6 shows the sample descriptions for this evaluation and Figure 13 shows the storage modulus elasticity data. A comparison between Comparative Runs 12 and 28 on the one hand and Comparative Runs 29-31 as plotted in Figure 13 indicates VECTOR 4211 is highly sensitive to Haake torque exposure. Further, a comparison between Comparative Runs 29-31 as plotted in Figure 13 and Inventive Examples 11 and Comparative Runs 20, 22 and 23 as plotted in Figure 9 shows various thermoelastic polymers (that is, ATTANE 4203, TAFMER P0480, EXACT 3027 and ENGAGE EG8200 at 25 weight percent loadings) significantly improved the Haake thermal shear or processing stability of the KRATON G1650 block copolymer. That is, these polymers allowed lower storage moduli throughout the temperature range of -26°C to 24°C that better approximates the neat, non-Haake exposed block copolymers (Comparative Runs 12 and 28) while the neat block copolymers showed higher storage moduli throughout the same range when processed in the Haake mixer (Comparative Runs 29-31). However, a comparison between EVA blend compositions at 25 and 50 weight percent in VECTOR 4211 as plotted in Figure 9 with the neat, Haake-exposed block copolymers (Comparative Runs 29-31) as plotted in Figure 12 indicates EVA did not provide similar improvements in thermal stability.

**Table 8**

| Haake Exposure of VECTOR 4211 | | |
|---|---|---|
| Comparative Runs | | Haake Exposure 7 min. at 60 rpm |
| 12* | 100 percent VECTOR 4211 | None |
| 28* | 100 percent VECTOR 4211 | None |
| 29* | 100 percent VECTOR 4211 | Yes |
| 30* | 100 percent VECTOR 4211 | Yes |
| 31* | 100 percent VECTOR 4211 | Yes |

| | | |
|---|---|---|
| *Comparative example only; not an example of the present invention. | | |

## Claims

1. A thermoplastic elastomeric blend composition comprising (a) from 50 to 99 percent by weight of the total composition of at least one styrenic block copolymer and (b) from 1 to 50 percent by weight of the total composition of at least one ethylene/α-olefin interpolymer, wherein said ethylene/α-olefin interpolymer comprises at least one C₃-C₂₀ α-olefin and is characterized as having
i. a density from 0.855 g/cm³ to 0.905 g/cm³,
ii. a short chain branching distribution index (SCBDI) greater than 50 percent,
iii. a single melting point between -30°C and 140°C, as determined using differential scanning calorimetry (DSC).
iv. a melt flow ratio, I₁₀/I₂, ≥ 5.63,
v. a molecular weight distribution, M_{w}/Mₙ, defined by the equation: M_{w}/Mₙ ≤ (I₁₀/I₂) - 4.63,
vi. a critical shear rate at onset of surface melt fracture at least 50 percent greater than the critical shear rate at onset of surface melt fracture of a linear ethylene/C₃-C₂₀ α-olefin interpolymer having the same I₂ and M_{w}/Mₙ and
vii. from 0.01 branches/1000 carbons to 3 branches/1000 carbons wherein the length of these branches is longer than the branches that result from the incorporation of the α-olefin comonomer(s) into the polymer backbone.

2. The composition of Claim 1, wherein the ethylene/α-olefin interpolymer is a substantially inert extender of the styrene block copolymer and the composition is characterized as having:
i. storage moduli throughout the range of -26°C to 24°C of less than 3.5 x 10⁸ Pa (3.5 x 10⁹ dynes/cm²)
ii. a ratio of storage modulus at -26°C to storage modulus at 24°C of less than 4, and
iii. storage moduli at -26°C and 24°C 0.2 to 3 times higher than the storage moduli at -26°C and 24°C, respectively, of the neat block copolymer portion of the composition.

3. The composition of Claim 1 wherein the at least one C₃-C₂₀ α-olefin is selected from the group consisting of propylene, 1-butene, 4-methyl-1-pentene, 1-hexene and 1-octene.

4. The composition of Claim 3 wherein the ethylene interpolymer is a copolymer of ethylene and 1-octene.

5. The composition of Claim 1 wherein the ethylene/α-olefin interpolymer has a density in the range of 0.86 g/cm³ to 0.89 g/cm³.

6. The composition of Claim 1 wherein the styrenic segment is styrene.

7. The composition of Claim 1 wherein the styrenic block copolymer is selected from the group consisting styrene/butadiene/styrene, styrene/isoprene/styrene, styrene/ethylene-butene/styrene and styrene/ethylenepropylene/styrene.

8. The composition of Claim 1 wherein the styrenic block copolymer has at least one rubber monomer segment.

9. The composition of Claim 8 wherein the rubber monomer segment is unsaturated.

10. The composition of Claim 9 wherein the rubber segment is selected from the group consisting of butadiene and isoprene.

11. The composition of Claim 8 wherein the rubber monomer segment is saturated.

12. The composition of Claim 11 wherein the rubber segment is selected from the group consisting of ethylene-butene and ethylene-propylene.

13. The composition of Claim 1 wherein the styrenic block copolymer is selected from the group consisting of a linear diblock polymer, a linear triblock polymer, a radial diblock polymer and a radial triblock polymer.

14. The composition of Claim 1 comprising from 60 to 95 percent by weight of the total composition of the styrenic block copolymer and from 5 to 40 percent by weight of the total of the ethylene interpolymer.

15. A thermoplastic elastomeric blend composition comprising (a) from 70 to 90 percent by weight of the total composition of a styrene/butadiene/styrene block copolymer containing 10 to 35 weight percent styrene and (b) from 10 to 30 by weight of the total composition of an ethylene/1-octene interpolymer having a density from 0.865 to 0.885 g/cm³; wherein the composition is characterized as having:
i. storage moduli throughout the range of -26°C to 24°C of less than 3.5 x 10⁸ Pa (3.5 x 10⁹ dynes/cm²)
ii. a ratio of storage modulus at -26°C to storage modulus at 24°C of less than 3, and
iii. storage moduli at -26°C and 24°C 0.4 to 2.2 times higher than the storage moduli at -26°C and 24°C, respectively, of the neat block copplymer portion of the composition,
and wherein said ethylene/1-octene interpolymer is characterized as having:
i. a short chain branching distribution index (SCBDI) greater than 50 percent,
ii. a single melting point between -30°C and 140°C, as determined using differential scanning calorimetry (DSC).
iii. a melt flow ratio, I₁₀/I₂, ≥ 5.63,
iv. a molecular weight distribution, M_{w}/Mₙ, defined by the equation: M_{w}/Mₙ ≤ (I₁₀/I₂) - 4.63,
v. a critical shear rate at onset of surface melt fracture at least 50 percent greater than the critical shear rate at onset of surface melt fracture of a linear ethylene/C₃-C₂₀ α-olefin interpolymer having the same I₂ and M_{w}/Mₙ and
vi. from 0.01 branches/1000 carbons to 3 branches/1000 carbons wherein the length of these branches is longer than the branches that result from the incorporation of the α-olefin comonomer(s) into the polymer backbone.

16. The composition of Claim 14 wherein 25 percent by weight of the total composition is a styrene/butadiene/styrene block copolymer.

17. The composition of Claim 14 wherein 25 percent by weight of the total composition is a styrene/isoprene/styrene block copolymer.

18. The composition of Claim 14 wherein 25 percent by weight of the total composition is a styrene/ethylene-butene/styrene block copolymer.

19. The composition of Claim 14 wherein 25 percent by weight of the total composition is a styrene/ethylene-propylene/styrene block copolymer.

20. A thermoplastic elastomeric blend composition comprising (a) from 50 to 99 percent by weight of the total composition of at least one styrenic block copolymer and (b) from 1 to 50 percent by weight of the total composition of at least one linear ethylene/α-olefin interpolymer, wherein the linear ethylene/α-olefin interpolymer comprises at least one C₃-C₂₀ α-olefin and is characterized as having
i. a density from 0.855 g/cm³ to 0.905 g/cm³,
ii. a short chain branching distribution index (SCBDI) greater than 50 percent, and
iii. a single melting point between -30° and 140°C, as determined using differential scanning calorimetry (DSC).

21. A method making a fabricated article in the form of a film, fiber or molding comprising:
(a) providing a composition comprising from 99 to 50 percent by weight of the total composition of at least one styrenic block copolymer and (b) from 1 to 50 percent by weight of the total composition of at least one ethylene/α-olefin interpolymer, wherein said ethylene/α-olefin interpolymer comprises at least one C₃-C₂₀ α-olefin and is characterized as having
i. a density from 0.855 g/cm³ to 0.905 g/cm³,
ii. a short chain branching distribution index (SCBDI) greater than about 50 percent,
iii. a single melting point between -30°C and 140°C, as determined using differential scanning calorimetry (DSC).
iv. a melt flow ratio, I₁₀/I₂, ≥ 5.63,
v. a molecular weight distribution, M_{w}/Mₙ, defined by the equation: M_{w}/Mₙ ≤ (I₁₀/I₂) - 4.63,
vi. a critical shear rate at onset of surface melt fracture at least 50 percent greater than the critical shear rate at onset of surface melt fracture of a linear ethylene/C₃-C₂₀ α-olefin interpolymer having the same I₂ and M_{w}/Mₙ and
vii. from 0.01 branches/1000 carbons to 3 branches/1000 carbons wherein the length of these branches is longer than the branches that result from the incorporation of the α-olefin comonomer(s) into the polymer backbone.
(b) heating the composition to a temperature sufficient to form the composition into a fabricated article;
(c) forming the heated composition into a film, fiber or molded article; and
(d) collecting the film, fiber or molded article or transferring the film, fiber or molded article for further processing.

22. The composition of any of the claims 1-20, further comprising an antioxidant, cling additive, antiblock additive, colorant, pigment, wax, nucleating agent, extender oil, filler, or/and tackifier.

23. The composition of any of the claims 1-20 and 22, as provided in for asphalt modification, polymer processing, impact and surface modification, oil gel viscosity modification, or/and rubber extender/binder compounding.

24. The composition of any of the claims 1-20 and 22-23, in the form of an adhesive formulation or a sealant formulation.

25. An adhesive formulation comprising a composition of any of the claims 1-20 and 22-24.

## Patentansprüche

1. Thermoplastische Elastomergemischzusammensetzung, umfassend (a) von 50 bis 99 Gewichtsprozent der Gesamtzusammensetzung von mindestens einem styrolartigen Blockcopolymer und (b) von 1 bis 50 Gewichtsprozent der Gesamtzusammensetzung von mindestens einem Ethylen/α-Olefininterpolymer, worin das Ethylen/α-Olefininterpolymer mindestens ein C₃-C₂₀-α-Olefin umfaßt und gekennzeichnet ist durch:
i. eine Dichte von 0,855 g/cm³ bis 0,905 g/cm³,
ii. einen Kurzkettenverzweigungsverteilungsindex (SCBDI) von größer als 50 Prozent,
iii. einen einzigen Schmelzpunkt zwischen -30°C und 140°C, bei Bestimmung unter Verwendung der Differentialscanningcalorimetrie (DSC),
iv. ein Schmelzflußverhältnis I₁₀/I₂ ≥ 5,63,
v. eine Molekulargewichtsverteilung M_{w}/Mₙ, die durch die Gleichung: M_{w}/Mₙ ≤ (I₁₀/I₂) - 4,63 definiert ist,
vi. eine kritische Scherrate beim Einsetzen des Oberflächenschmelzbruches, die mindestens 50 Prozent größer ist als die kritische Scherrate beim Einsetzen des Oberflächenschmelzbruches eines linearen Ethylen/C₃-C₂₀-α-Olefininterpolymers mit dem gleichen I₂ und M_{w}/Mₙ ist, und
vii. von 0,01 Verzweigungen/1000 Kohlenstoffe bis 3 Verzweigungen/1000 Kohlenstoffe, worin die Länge dieser Verzweigungen größer als die Verzweigungen ist, welche aus der Einführung der α-Olefincomonomere in das Polymergrundgerüst resultiert.

2. Zusammensetzung nach Anspruch 1, worin das Ethylen/α-Olefininterpolymer ein im wesentlichen inerter Extender des Styrolblockcopolymers ist und die Zusammensetzung gekennzeichnet ist durch:
i. Speichermoduli über den Bereich von -26°C bis 24°C von weniger als 3,5 x 10⁸ Pa (3,5 x 10⁹ Dyn/cm²),
ii. ein Verhältnis von Speichermodul bei -26°C zu Speichermodul bei 24°C von weniger als 4, und
iii. Speichermoduli bei -26°C und 24°C, die 0,2 bis 3 mal größer als die Speichermoduli bei -26°C bzw. 24°C des unverdünnten Blockcopolymeranteils der Zusamensetzung sind.

3. Zusammensetzung nach Anspruch 1, worin mindestens ein C₃-C₂₀-α-Olefin ausgewählt ist aus der aus Propylen, 1-Buten, 4-Methyl-1-penten, 1-Hexen und 1-Octen bestehenden Gruppe.

4. Zusammensetzung nach Anspruch 3, worin das Ethyleninterpolymer ein Copolymer von Ethylen und 1-Octen ist.

5. Zusammensetzung nach Anspruch 1, worin das Ethylen/α-Olefininterpolymer eine Dichte im Bereich von 0,86 g/cm³ bis 0,89 g/cm³ aufweist.

6. Zusammensetzung nach Anspruch 1, worin das styrolartige Segment Styrol ist.

7. Zusammensetzung nach Anspruch 1, worin das styrolartige Blockcopolymer ausgewählt ist aus der aus Styrol/Butadien/Styrol, Styrol/Isopren/Styrol, Styrol/Ethylen-Buten/Styrol und Styrol/Ethylen-Propylen/Styrol bestehenden Gruppe.

8. Zusammensetzung nach Anspruch 1, worin das styrolartige Blockcopolymer mindestens ein Kautschukmonomersegment aufweist.

9. Zusammensetzung nach Anspruch 8, worin das Kautschukmonomersegment ungesättigt ist.

10. Zusammensetzung nach Anspruch 9, worin das Kautschuksegment ausgewählt ist aus der aus Butadien und Isopren bestehenden Gruppe.

11. Zusammensetzung nach Anspruch 8, worin das Kautschukmonomersegment gesättigt ist.

12. Zusammensetzung nach Anspruch 11, worin das Kautschuksegment ausgewählt ist aus der aus Ethylen-Buten und Ethylen-Propylen bestehenden Gruppe.

13. Zusammensetzung nach Anspruch 1, worin das styrolartige Blockcopolymer aus der aus einem linearen Diblockpolymer, einem linearen Triblockpolymer, einem radialen Diblockpolymer und einem radialen Triblockpolymer bestehenden Gruppe.

14. Zusammensetzung nach Anspruch 1, umfassend von 60 bis 95 Gewichtsprozent der Gesamtzusammensetzung des styrolartige Blockcopolymers und von insgesamt 5 bis 40 Gewichtsprozent des Ethyleninterpolymers.

15. Thermoplastische Elastomergemischzusammensetzung, umfassend (a) von 70 bis 90 Gewichtsprozent der Gesamtzusammensetzung von einem Styrol/Butadien/Styrolblockcopolymer, das 10 bis 35 Gewichtsprozent Styrol enthält, und (b) von 10 bis 30 Gewichtsprozent der Gesamtzusammensetzung eines Ethylen/1-Octeninterpolymers mit einer Dichte von 0,865 bis 0,885 g/cm³, worin die Zusammensetzung gekennzeichnet ist durch:
i. Speichermoduli über den Bereich von -26°C bis 24°C von weniger als 3,5 x 10⁸ Pa (3,5 x 10⁹ Dyn/cm²),
ii. ein Verhältnis von Speichermodul bei -26°C zu Speichermodul bei 24°C von weniger als 3, und
iii. Speichermoduli bei -26°C und 24°C, die 0,4 bis 2,2 mal größer als die Speichermoduli bei -26°C bzw. 24°C des unverdünnten Blockcopolymeranteils der Zusamensetzung sind,
und worin das Ethylen/1-Octeninterpolymer gekennzeichnet ist durch:
i. einen Kurzkettenverzweigungsverteilungsindex (SCBDI) von größer als 50 Prozent,
ii. einen einzigen Schmelzpunkt zwischen -30°C und 140°C, bei Bestimmung unter Verwendung der Differentialscanningcalorimetrie (DSC),
iii. ein Schmelzflußverhältnis I₁₀/I₂ ≥ 5,63,
iv. eine Molekulargewichtsverteilung M_{w}/Mₙ, die durch die Gleichung: M_{w}/Mₙ ≤ (I₁₀/I₂) - 4,63 definiert ist,
v. eine kritische Scherrate beim Einsetzen des Oberflächenschmelzbruches, die mindestens 50 Prozent größer ist als die kritische Scherrate beim Einsetzen des Oberflächenschmelzbruches eines linearen Ethylen/C₃-C₂₀-α-Olefininterpolymers mit dem gleichen I₂ und M_{w}/Mₙ ist, und
vi. von 0,01 Verzweigungen/1000 Kohlenstoffe bis 3 Verzweigungen/1000 Kohlenstoffe, worin die Länge dieser Verzweigungen größer als die Verzweigungen ist, welche aus der Einführung der α-Olefincomonomere in das Polymergrundgerüst resultiert.

16. Zusammensetzung nach Anspruch 14, worin 25 Gewichtsprozent der gesamten Zusammensetzung ein Styrol/Butadien/Styrolblockcopolymer sind.

17. Zusammensetzung nach Anspruch 14, worin 25 Gewichtsprozent der Gesamtzusammensetzung ein Styrol/Isopren/Styrolblockcopolymer sind.

18. Zusammensetzung nach Anspruch 14, worin 25 Gewichtsprozent der Gesamtzusammensetzung ein Styrol/Ethylen-Buten/Styrolblockcopolymer sind.

19. Zusammensetzung nach Anspruch 14, worin 25 Gewichtsprozent der Gesamtzusammensetzung ein Styrol/Ethylen-Propylen/Styrolblockcopolymer sind.

20. Thermoplastische Elastomergemischzusammensetzung, umfassend (a) von 50 bis 99 Gewichtsprozent der Gesamtzusammensetzung von mindestens einem styrolartigen Blockcopolymer und (b) von 1 bis 50 Gewichtsprozent der Gesamtzusammensetzung von mindestens einem linearen Ethylen/α-Olefininterpolymer, worin das lineare Ethylen/α-Olefininterpolymer mindestens ein C₃-C₂₀-α-Olefin umfaßt und gekennzeichnet ist durch:
i. eine Dichte von 0,855 g/cm³ bis 0,905 g/cm³,
ii. einen Kurzkettenverzweigungsverteilungsindex (SCBDI) von größer als 50 Prozent, und
iii. einen einzigen Schmelzpunkt zwischen -30°C und 140°C, bei Bestimmung unter Verwendung der Differentialscanningcalorimetrie (DSC).

21. Verfahren zum Herstellen eines Fertigungsgegenstands in der Form einer Folie, Faser oder eines Formteils, umfassend:
(a) Bereitstellen einer Zusammensetzung, die von 99 bis 50 Gewichtsprozent der Gesamtzusammensetzung von mindestens einem Styrolblockcopolymer und (b) von 1 bis 50 Gewichtsprozent der Gesamtzusammensetzung von mindestens einem Ethylen/α-Olefininterpolymer enthält, worin das Ethylen/α-Olefininterpolymer mindestens ein C₃-C₂₀-α-Olefin umfaßt und gekennzeichnet ist durch:
i. eine Dichte von 0,855 g/cm³ bis 0,905 g/cm³,
ii. einen Kurzkettenverzweigungsverteilungsindex (SCBDI) von größer als ungefähr 50 Prozent,
iii. einen einzigen Schmelzpunkt zwischen -30°C und 140°C, bei Bestimmung unter Verwendung der Differentialscanningcalorimetrie (DSC),
iv. ein Schmelzflußverhältnis I₁₀/I₂ ≥ 5,63,
v. eine Molekulargewichtsverteilung M_{w}/Mₙ, die durch die Gleichung: M_{w}/Mₙ ≤ (I₁₀/I₂) - 4,63 definiert ist,
vi. eine kritische Scherrate beim Einsetzen des Oberflächenschmelzbruches, die mindestens 50 Prozent größer ist als die kritische Scherrate beim Einsetzen des Oberflächenschmelzbruches eines linearen Ethylen/C₃-C₂₀-α-Olefininterpolymers mit dem gleichen I₂ und M_{w}/Mₙ ist, und
vii. von 0,01 Verzweigungen/1000 Kohlenstoffe bis 3 Verzweigungen/1000 Kohlenstoffe, worin die Länge dieser Verzweigungen größer als die Verzweigungen ist, welche aus der Einführung der α-Olefincomonomere in das Polymergrundgerüst resultiert.
(b) Erwärmen der Zusammensetzung auf eine Temperatur, die ausreichend ist, um die Zusammensetzung zu einem Fertigungsgegenstand zu formen,
(c) Formen der erwärmten Zusammensetzung zu einer Folie, Faser oder einem Formgegenstand; und
(d) Aufnehmen der Folie, Faser oder des Formgegenstands oder Zuführen der Folie, Faser oder des Formgegenstands zu einer Weiterverarbeitung.

22. Zusammensezung nach einem der Ansprüche 1 - 20, weiterhin umfassend ein Antioxidationsmittel, ein Haftadditiv, ein Antiblockadditiv, ein Färbemittel, ein Pigment, ein Wachs, ein Kernbildungsmittel, ein Extenderöl, einen Füllstoff und/oder einen Klebrigmacher.

23. Zusammensetzung nach einem der Ansprüche 1 - 20 und 22, wie bereitgestellt für die Asphaltmodifizierung, die Polymerverarbeitung, Schlagfestigkeits- und Oberflächenmodifizierung, Ölgelviskositätsmodifizierung oder/und als Kautschukextender/Bindemittel-Compounding.

24. Zusammensetzung nach einem der Ansprüche 1 - 20 und 22 - 23 in der Form einer Adhäsionsformulierung oder einer Dichtmittelformulierung.

25. Adhäsionsformulierung, umfassend eine Zusammensetzung nach einem der Ansprüche 1 - 20 und 22 - 24.

## Revendications

1. Composition élastomère thermoplastique à base d'un mélange comprenant (a) de 50 à 99 % en poids de la composition totale d'au moins un copolymère séquencé styrénique et (b) de 1 à 50 % en poids de la composition totale d'au moins un interpolymère d'éthylène/α-oléfine, dans laquelle ledit interpolymère d'éthylène/α-oléfine comprend au moins une α-oléfine en C₃-C₂₀ et est caractérisée par le fait qu'elle présente :
i. une densité de 0,855 g/cm³ à 0,905 g/cm³,
ii. un indice de distribution des ramifications à chaîne courte (SCBDI) supérieur à 50 %,
iii. un seul point de fusion entre -30°C et 140°C, tel que déterminé par une analyse calorimétrique différentielle à balayage (ACD),
iv. un rapport de fluidité, I₁₀/I₂, ≥ 5,63,
v. une distribution des masses moléculaires, M_{w}/Mₙ, définie par l'équation : M_{w}/Mₙ ≤ (I₁₀/I₂) - 4,63,
vi. un gradient de cisaillement critique à l'amorçage de la fracture superficielle de la masse fondue d'au moins 50 % supérieur au gradient de cisaillement critique à l'amorçage de la fracture superficielle de la masse d'un interpolymère d'éthylène/α-oléfine en C₃-C₂₀ linéaire présentant les mêmes valeurs I₂ et M_{w}/Mₙ, et
vii. de 0,01 ramification/1000 atomes de carbone à 3 ramifications/1000 atomes de carbone, dans lequel la longueur de ces ramifications est plus importante que les ramifications qui résultent de l'incorporation du (ou des) comonomère(s) d'α-oléfine dans le squelette du polymère.

2. Composition selon la revendication 1, dans laquelle l'interpolymère d'éthylène/α-oléfine est un agent de charge diluante substantiellement inerte du copolymère séquencé de styrène et la composition est caractérisée par le fait qu'elle présente :
i. des modules de mémoire sur toute la gamme de -26°C à 24°C inférieurs à 3,5 x 10⁸ Pa (3,5 x 10⁹ dynes/cm²),
ii. un rapport module de mémoire à -26°C/module de mémoire à 24°C inférieur à 4, et
iii. des modules de mémoire à -26°C et 24°C, de 0,2 à 3 fois supérieurs aux modules de mémoire à -26°C et 24°C, respectivement, de la partie copolymère séquencé seule de la composition.

3. Composition selon la revendication 1, dans laquelle au moins l'α-oléfine en C₃-C₂₀ présente est choisie dans le groupe composé du propylène, du 1-butène, du 4-méthyl-1-pentène, du 1-hexène et du 1-octène.

4. Composition selon la revendication 3, dans laquelle l'interpolymère d'éthylène est un copolymère d'éthylène et de 1-octène.

5. Composition selon la revendication 1, dans laquelle l'interpolymère d'éthylène/α-oléfine a une densité comprise entre 0,86 g/cm³ et 0,89 g/cm³.

6. Composition selon la revendication 1, dans laquelle le segment styrénique est le styrène.

7. Composition selon la revendication 1, dans laquelle le copolymère séquencé styrénique est choisi dans le groupe formé par le styrène-butadiène/styrène, le styrène/isoprène/styrène, le styrène/éthylène-butène/ styrène et le styrène/éthylène-propylène/styrène.

8. Composition selon la revendication 1, dans laquelle le copolymère séquencé styrénique possède au moins un segment de monomère caoutchouteux.

9. Composition selon la revendication 8, dans laquelle le segment de monomère caoutchouteux est insaturé.

10. Composition selon la revendication 9, dans laquelle le segment caoutchouteux est choisi dans le groupe formé par le butadiène et l'isoprène.

11. Composition selon la revendication 8, dans laquelle le segment de monomère caoutchouteux est saturé.

12. Composition selon la revendication 11, dans laquelle le segment caoutchouteux est choisi dans le groupe formé par l'éthylène-butène et l'éthylène-propylène.

13. Composition selon la revendication 1, dans laquelle le copolymère séquencé styrénique est choisi dans le groupe formé par un polymère à deux blocs linéaire, un polymère à trois blocs linéaire, un polymère à deux blocs radial et un polymère à trois blocs radial.

14. Composition selon la revendication 1 comprenant de 60 à 95 % en poids de la composition totale du copolymère séquencé styrénique et de 5 à 40 % en poids de la composition totale de l'interpolymère d'éthylène.

15. Composition élastomère thermoplastique à base d'un mélange comprenant (a) de 70 à 90 % en poids de la composition totale d'un copolymère séquencé de styrène/butadiène/styrène contenant de 10 à 35 % en poids de styrène et (b) de 10 à 30 % en poids de la composition totale d'un interpolymère d'éthylène/1-octène ayant une densité de 0,865 g/cm³ à 0,885 g/cm³, dans laquelle la composition est caractérisée par le fait qu'elle présente :
i. des modules de mémoire sur toute la gamme de -26°C à 24°C inférieurs à 3,5 x 10⁸ Pa (3,5 x 10⁹ dynes/cm²),
ii. un rapport module de mémoire à -26°C/module de mémoire à 24°C inférieur à 3, et
iii. des modules de mémoire à -26°C et 24°C, de 0,4 à 2,2 fois supérieurs aux modules de mémoire à -26°C et 24°C, respectivement, de la partie copolymère séquencé seule de la composition,
et dans laquelle ledit interpolymère d'éthylène/1-octène est caractérisé par le fait qu'il présente :
i. un indice de distribution des ramifications à chaîne courte (SCBDI) supérieur à 50 %,
ii. un seul point de fusion entre -30°C et 140°C, tel que déterminé par une analyse calorimétrique différentielle à balayage (ACD),
iii. un rapport de fluidité, I₁₀/I₂, ≥ 5,63,
iv. une distribution des masses moléculaires, M_{w}/Mₙ, définie par l'équation : M_{w}/Mₙ ≤ (I₁₀/I₂) - 4,63,
v. un gradient de cisaillement critique à l'amorçage de la fracture superficielle de la masse fondue d'au moins 50 % supérieur au gradient de cisaillement critique à l'amorçage de la fracture superficielle de la masse fondue d'un interpolymère d'éthylène/α-oléfine en C₃-C₂₀ linéaire présentant les mêmes valeurs I₂ et M_{w}/Mₙ, et
vi. de 0,01 ramification/1000 atomes de carbone à 3 ramifications/1000 atomes de carbone, dans lequel la longueur de ces ramifications est plus importante que les ramifications qui résultent de l'incorporation du (ou des) comonomère(s) d'α-oléfine dans le squelette du polymère.

16. Composition selon la revendication 14, dans laquelle 25 % en poids de la composition totale est un copolymère séquencé de styrène/butadiène/styrène.

17. Composition selon la revendication 14, dans laquelle 25 % en poids de la composition totale est un copolymère séquencé de styrène/isoprène/styrène.

18. Composition selon la revendication 14, dans laquelle 25 % en poids de la composition totale est un copolymère séquencé de styrène/éthylène-butène/styrène.

19. Composition selon la revendication 14, dans laquelle 25 % en poids de la composition totale est un copolymère séquencé de styrène/éthylène-propylène/ styrène.

20. Composition élastomère thermoplastique à base d'un mélange comprenant (a) de 50 à 99 % en poids de la composition totale d'au moins un copolymère séquencé styrénique et (b) de 1 à 50 % en poids de la composition totale d'au moins un interpolymère d'éthylène/α-oléfine linéaire, dans laquelle ledit interpolymère d'éthylène/ α-oléfine linéaire comprend au moins une α-oléfine en C₃-C₂₀ et est caractérisée par le fait qu'elle présente :
i. une densité de 0,855 g/cm³ à 0,905 g/cm³,
ii. un indice de distribution des ramifications à chaîne courte (SCBDI) supérieur à 50 %, et
iii. un seul point de fusion entre -30°C et 140°C, tel que déterminé par une analyse calorimétrique différentielle à balayage (ACD).

21. Procédé de fabrication d'un article sous la forme d'un film, d'une fibre ou d'un moulage comprenant :
(a) la préparation d'une composition comprenant de 99 à 50 % en poids de la composition totale d'au moins un copolymère séquencé styrénique et (b) de 1 à 50 % en poids de la composition totale d'au moins un interpolymère d'éthylène/α-oléfine, dans laquelle ledit interpolymère d'éthylène/α-oléfine comprend au moins une α-oléfine en C₃-C₂₀ et est caractérisée par le fait qu'elle présente :
i. une densité de 0,855 g/cm³ à 0,905 g/cm³,
ii. un indice de distribution des ramifications à chaîne courte (SCBDI) supérieur à 50 %,
iii. un seul point de fusion entre -30°C et 140°C, tel que déterminé par une analyse calorimétrique différentielle à balayage (ACD),
iv. un rapport de fluidité, I₁₀/I₂, ≥ 5,63,
v. une distribution des masses moléculaires, M_{w}/Mₙ, définie par l'équation : M_{w}/Mₙ ≤ (I₁₀/I₂) - 4,63,
vi. un gradient de cisaillement critique à l'amorçage de la fracture superficielle de la masse fondue d'au moins 50 % supérieur au gradient de cisaillement critique à l'amorçage de la fracture superficielle de la masse fondue d'un interpolymère d'éthylène/α-oléfine en C₃-C₂₀ linéaire présentant les mêmes valeurs I₂ et M_{w}/Mₙ, et
vii. de 0,01 ramification/1000 atomes de carbone à 3 ramifications/1000 atomes de carbone, dans lequel la longueur de ces ramifications est plus importante que les ramifications qui résultent de l'incorporation du (ou des) comonomère (s) d'α-oléfine dans le squelette du polymère.
(b) le chauffage de la composition jusqu'à une température suffisante pour conférer à la composition la forme d'un article fabriqué ;
(c) la mise en forme de la composition chauffée en film, fibre ou article moulé ; et
(d) la récupération du film, de la fibre ou de l'article moulé ou le transfert du film, de la fibre ou de l'article moulé pour une mise en oeuvre ultérieure.

22. Composition selon l'une des revendications 1 à 20 comprenant, en outre, un antioxydant, un additif d'accrochage, un additif antibloc, un colorant, un pigment, une cire, un agent de nucléation, un agent de charge diluante à base d'huile, une charge et/ou un agent adhésif.

23. Composition selon l'une des revendications 1 à 20 et 22, proposée pour la modification de l'asphalte, la mise en oeuvre de polymères, la modification de surface et de résistance au choc, la modification de viscosité de gels à base d'huiles, et/ou la préparation de mélanges agent de charge diluante caoutchouteux/liant.

24. Composition selon l'une des revendications 1 à 20 et 22-23, sous la forme d'une formulation d'adhésif ou d'une formulation de matériau d'étanchéité.

25. Formulation d'adhésif comprenant une composition selon l'une des revendications 1 à 20 et 22 à 24.
